# EUROPEAN PATENT APPLICATION

(11) **EP 1 199 656 A2**
(43) Date of publication of application: **24.04.2002**
(21) Application number: 01118589.9
(22) Date of filing: 02.08.2001
(51) Int. Cl.: G06F 17/60, G07F 19/00

(54) **System for managing accounting data in real time**

(30) Priority: 12.10.2000 IT MI002200
(71) Applicant: Cassano, Maurizio, 20123 Milano (IT); Pavesi, Roberto, 20128 Milano (IT)
(72) Inventor: Cassano, Maurizio, 20123 Milano (IT); Pavesi, Roberto, 20128 Milano (IT)
(74) Representative: Petruzziello, Aldo

(57) **Abstract**

A system for managing accounting data comprises a central system (4) connected to a telecommunication network, the central system comprising a hardware structure and a software component (30) comprising software to manage accounting data, software to manage bank reconciliation data and software to manage the network, the hardware structure comprising at least one CPU (3) and a data base (5) composed of an accounting data base (5') and a bank reconciliation data base (9), the central system (4) being accessible to enterprises (1), accountants (6) and banks (8), so that enterprises can record data concerning their accounting operations in the data base (5), accountants (6) can check and process the accounting operations of enterprises recorded in the accounting data base (5') and banks (8) can send the banking/financial movements of enterprises (1) to the bank reconciliation data base (9) and check these banking/financial movements in the bank reconciliation data base (9).

## Description

The present invention relates to a system for managing accounting data in real time using technological solutions in the field of data processing and telecommunications. In particular, the present invention relates to a system for collegial and simultaneous management of accounting data and for the transmission of these accounting data with synchronous (bi-directional) and asynchronous (one-directional) modes.

Hereafter, specific reference will be made to enterprises, accountants and banks, although the term enterprise indicates any firm, company, body, professional; the term accountant indicates any accountant, accounts technician and their accounting operators and the term bank indicates any body acting as financial broker.

Currently all enterprises have accounting staff to record accounting entries, generally kept in the accounting books of the enterprise. When a company balance sheet is to be drawn up or when calculations are to be performed on accounting entries to pay any tax obligations, a copy of the accounting entries is generally taken to the offices of accountants or auditors who analyse these accounting entries. Alternatively, accountants can go to the enterprise directly to examination the accounting entries. After having appropriately analysed the accounting entries, the accountant or the firm's accounting operator goes to a bank to pay the tax obligation.

It is evident that the system for managing accounting data, according to the know art has a series of drawbacks.

In fact this known system for managing accounting data:
is excessively complex and wasteful due to the substantial number of operators involved;
entails excessive loss of time caused by the movement of people and documents;
is not safe and reliable as there is a high probability of accounting errors due to a considerable time lapse between a business operation being execution and its recording in the accounts.

The object of the present invention is to eliminate the disadvantages of the known art by providing a system for managing accounting data that is simple and is able to limit the number of operators involved.

Another object of the present invention is to provide such a system for managing accounting data that is fast and can perform operations automatically, limiting the quantity of documents to be moved.

Yet another object of the present invention is to provide such a system for managing accounting data that is safe and is able to provide complete and exact information.

A further object of the present invention is to provide such a system for managing accounting data that is versatile and is able to adapt to the dynamic evolution of an enterprise.

These objects are attained in accordance with the invention with the characteristics listed in the annexed independent claim 1.

Advantageous embodiments of the invention are set down in the dependent claims.

The system for managing accounting data according to the invention comprises a central system connected to a telecommunications network. This central system comprises a hardware structure and a software component. The hardware structure comprises at least one CPU to process software programs and a data base comprising an accounting data base and a bank reconciliation data base. The software component comprises software to manage accounting data, software to manage bank reconciliation data and software to manage the telecommunication network.

Enterprises, accountants and banks, equipped with access passwords, can connect to the central system. In this way enterprises can record their accounting operations in the data base, accountants can check and process the accounting operations of enterprises, recorded in the accounting data base and banks can send to and receive from the bank reconciliation data base the banking/financial movements of enterprises.

The system for managing accounting data according to the invention has various advantages.

With this system relations and interconnections between accountant and client enterprise improve and the relations for data management between the parties becomes simpler and more immediate.

The system according to the invention minimizes the movement of documents and people, as the management of all operations can be performed using a desktop or portable Personal Computer, or other innovative technological instruments, irrespective of the location of the operator, providing these instruments are connected or can be connected to the Central System and the person authorised to perform that particular operation is identified.

Another advantage of the system according to the invention is the decrease in the interval of time between performance of the business activity and the relevant accounting moment.

The procedure for managing the accounting data is composed of innovative processes (illustrated hereafter) which allow accountants and enterprises, that have contracts for accounts management with the former, to simply and rapidly perform a series of management and accounting activities.

The procedure, which makes use of the most innovative information and communication technology currently available, makes it possible to:
- obtain a continual connection between accountant and enterprise, so that all accounting obligations, civil law, tax and social security implications of the enterprise and their relations with banks, can be managed in real time;
- learn of the financial situation up-dated in real time after each accounting charge and after every recording of financial movements with banks; with the presence of appropriate financial clearing accounts a truer vision of the credit and debit positions with the bank are obtained;
- analyse and/or act directly on accounting data, so that the accountant is always up-to-date with the accounting situation of his clients without having to continually request information;
- perform all the obligations required to carry out the aforesaid activities irrespective of the actual location of the operator (office, home, client, hotel, etc.). The procedure thus allows the widest logistic flexibility of operations:

- accounting charges are only performed by people with the necessary authorisation (at the enterprise, at the accountant's or in any other place), by means of a telematic connection with the Central System;
- balance sheets and tax documents can be processed directly by the accountant's staff, or by the actual accountant/accounts technician, without the need to move any documents and send any information;
- orders for payment of tax, social security and supply debts can be drawn up by the accountant, transmitted to the enterprise and sent to the bank without any movement of staff.

The procedure expedites interconnection with banks, by means of processes operating in a highly protected technological environment for the reconciliation of data from and for banks.

Further characteristics of the invention shall become clearer from the detailed description below, referring to a purely exemplary and non limiting embodiment, illustrated in the annexed drawings, in which:
Fig. 1 is a block diagram schematically showing the system for managing accounting data according to the invention;
Fig. 2 is a diagram showing the symbols used in the flow charts;
Figs. 3 - 37 are flow charts illustrating the processes that are employed in the system for managing accounting data according to the invention.

The system for managing accounting data according to the invention is described with the aid of the figures.

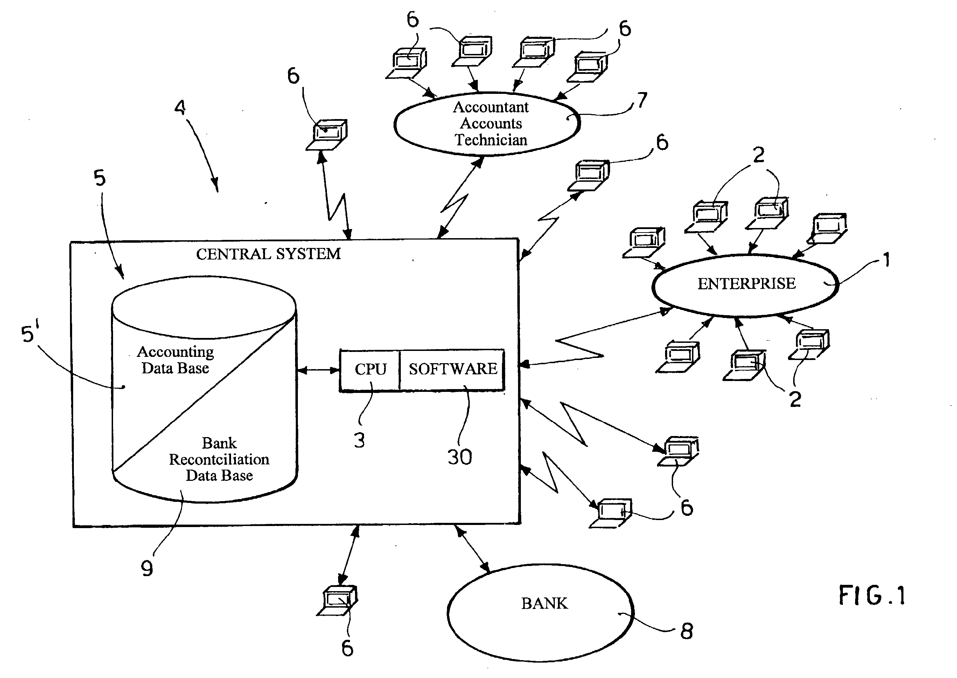

With reference to Fig. 1, a plurality of enterprises 1 are shown. Within each enterprise accounting operators 2 operate to record the accounting entries relevant to the enterprise. The accounting operators can operate using a desktop or portable personal computer, connected to a Local Area Network (LAN) of the enterprise provided with a network device that allows routing and transfer of data to a central system 4, through a geographical network or using a portable personal computer and other innovative technological instruments, equipped with device for connection to a geographical network. The standard world communication protocol used is the Internet or other similar communication systems.

The central system 4 is connected to the geographical network and comprises a hardware structure and a software component 30. The hardware structure comprises at least one CPU 3 to process software programs and a data base 5 to memorize data. The data base 5 comprises an accounting data base 5' in which accounting data are memorized and a bank reconciliation data base 9 in which bank reconciliation data are memorized.

The software component 30 comprises a program for managing accounting data that interacts with the accounting data base 5', a program for managing bank reconciliation data that interacts with the bank reconciliation data base 9 and a program for managing the telecommunication network to which the central system 4 is connected.

In this way a bi-directional flow of data from the enterprise 1 to the central system 4 and vice versa can be obtained. The accounting operators 2, by connection to the central system 4 can also examine the data base 5.

The system for managing accounting data according to the invention also envisages the chance for accountants 6 to access the central system 4. Accountants 6 can access the central system by means of a personal computer, which may even be portable, equipped with a device for connection to a remote network such as the Internet. If this is an accounting office, with accounting operators 7, equipped with an internal network with personal computers on which the accountants 6 and accounting operators 7 work, the network must be equipped with a network device that allows routing and transfer of data to the central system 4, through a geographic network. The standard world communication protocol used is the Internet or other similar communication systems.

In this way there will be a bi-directional flow of data between the accountants 6 and the central system 4. This means that through the central system 4 accountants 6 can examine the accounting data base 5' and the bank reconciliation data base 9 and check the accounting entries of enterprises 1 that are their clients. In conformity with the check performed, in real time the accountants 6 can send the central system 4 data relevant to tax obligations and work to be performed by the firm.

As the accounting operators 2 and 7 perform the accounting entries, the central system 4 updates the accounting data in the accounting data base 5' and, if envisaged by the type of operation, creates and sends the accounting data and relevant keys of reference for the bank reconciliation data base 9. Moreover, through connection to the central system 4, the accounting operators 2 and 7 can examine the accounting data base 5' and the bank reconciliation data base 9.

Various banks 8 regulating the financial transactions that the enterprises 1 have ordered, on the basis of suitable agreements with these banks 8, can connect to the central system 4. There is a bi-directional flow of bank/financial movements between the bank 8 and the central system 4. For this purpose the data base 5 envisages a reconciliation environment composed of the bank reconciliation data base 9 for reconciliation of data coming from or to be sent to the bank 8.

For each activity performed by the enterprise 1 that creates accounting entries in which a bank/financial operation is entered (such as invoicing for sales, invoicing for purchases, revenues or costs without invoice, paying cash into the bank, bills receivable and payable in movement and deposited, cash orders, transfers, cheques issued or received, credit cards, cash cards, manual accounting entries, VAT, social security institutions, etc.), the accounting data are sent in real time to the central system 4 which records them in the bank reconciliation data base 9.

The information recorded in the bank reconciliation base 9 provides the enterprise 1 and banks 8 with the real credit/debit bank situation, as it contains information concerning pending collections and orders to pay.

The bank reconciliation base 9 is composed of the records concerning bank/financial operations coming both from the enterprise 1 and from banks 8. The aforesaid entries are connected to one another in a relational and/or hypertextual form; moreover, with the activation of specific indicators, the development through time of the bank/financial operation is followed up and checked.

In real time and/or at agreed intervals, banks 8 withdraw information and/or communicate their accounting movements concerning the operations of the enterprise 1 in this data reconciliation environment.

Activities for automatic reconciliation of the various operations recorded are performed through appropriate keys of reference (previously agreed between banks 8 and Central System 4); in the presence of effective reconciliation appropriate accounting entries are created and recorded for the enterprise 1 in the Central System 4.

For those positions that cannot be reconciled automatically there is a process (illustrated hereafter) that allows the enterprise 1 to facilitate reconciliation, through mechanisms that make it easy to match the information coming from the two systems (enterprise and bank).

All information that is recorded in the reconciliation environment 9 of the data can be analysed with appropriate authorisations, by banks 8, by the enterprise 1 and by accountants 6. The analysis shows the state of the art of each recording.

The Central System 4 has the task of managing all accounting transactions, as it is the point of reference for all systems processes and for management of the data base 5 contents.

The main sources supplying the data base 5 are therefore the accounting procedures, through which the accounting data of the enterprise 1 are recorded and managed.

Either at pre-established intervals or on request a series of activities are activated; these trigger automated transfer of data and information between enterprise 1 and accountant 6 and vice versa and between enterprise 1 and bank 8 and vice versa, although never between accountant 6 and bank 8.

The procedure has a single accounting data base 5 on which the various administrative and control bodies involved in management activities can operate simultaneously.

Through a personal password and/or other technological or procedural solutions, an authorisation grid only allows specific operations to be performed. For this purpose, registration of the identification of the person who recorded the accounting entry is envisaged.

The central system 4 makes use of constantly updated accounting software to the continual variations in civil law and taxes, European and national regulations, which is multi-business, multi-fiscal and envisages a multiple accounts plan. In this way, the only task the enterprise 1 must perform is to manage its own data and the accountant 6 only requires to deal with the accounting, civil law, social security and fiscal aspects of its client without having to worry about updates in the accounting software.

In the system according to the invention the use of administrative documents of any nature as documentary backup for administrative activity is envisaged: "the document is intended as all graphic, photo-cinematographic, electromagnetic or of any other type of representation of the content of deeds, even internal, formed by public and private administrations or in any case used for administrative activities", and therefore also documents in electronic format made original by electronic signature. The Central System 4 allows the electronic signature to be connected to the electronic administrative document.

The methodological aspects utilized to describe the processes forming the procedure for managing accounting data according to the invention are illustrated hereafter.

As shown in the diagram below, a hierarchical division was created

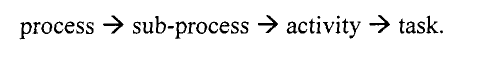

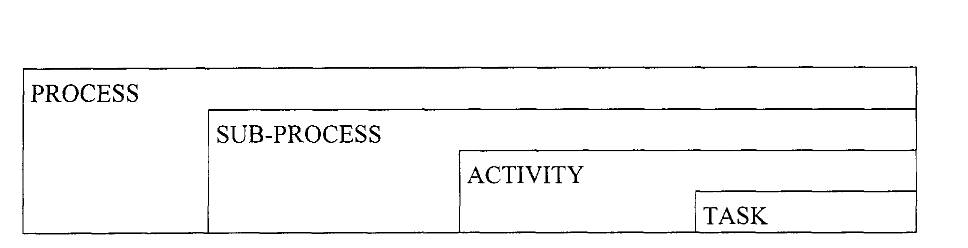

A procedure is normally composed of one or more processes, each process is composed of one or more sub-processes, each sub-process is composed of one or more activities, each activity is composed of one or more tasks.

Process is intended as a sequence of steps to obtain a specific result. A process can be divided into sub-processes interconnected with each other.

Activity is intended as a combination of people, technologies, methodologies and resources that produces a specific product or service, within the scope of a specific sub-process. Each activity must have a description indicating the various tasks. Task is intended both as the combination of work elements forming the activities and as the sequence of operating steps required to complete the activity.

Activities interact with the external environment through:
- Inputs - these represent inputs to the activity; they are the information or objects that are transformed into outputs.
- Checks - these represent the restrictions, instructions, rules and information that influence performance of the activity or sub-process.
- Means - these represent the resources and means used to perform the activity.
- Outputs - these represent the outputs or results of the activity.

The processes are given names, which express their initial and final status. The individual activity within the scope of the sub-processes/processes is identified by an identification code and the name of the activity. A hierarchical-decimal code is used, for example xx.xx.xx:

| | |
|---|---|
| 01.00.00 | 1st Process |
| 01.01.00 | 1st Sub-process of the 1st Process |
| 01.01.01 | 1 st Activity of the 1st Sub-process of the 1st Process |

On the basis of the above, an activity is represented through the table below.

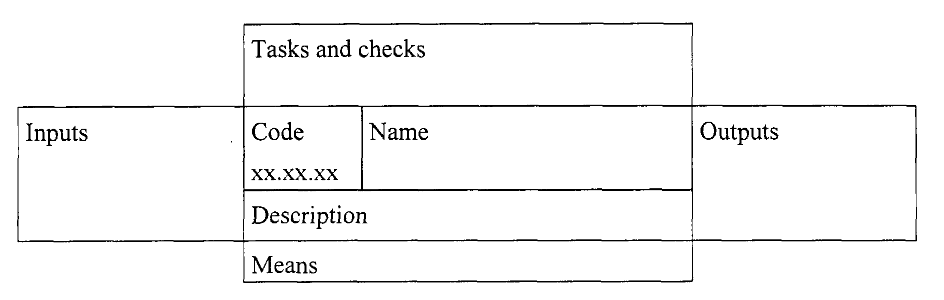

Inputs, outputs, checks and means can represent material entities (physical objects), information (orders, instructions, process status) or resources (financial, people, applications). In this way it is possible to represent both physical processes and information transformation processes.

The procedure for managing accounting data according to the invention is described below.
The procedure according to the invention comprises the following sub-processes:

| | |
|---|---|
| Invoicing for sales: | from issue of the document (invoices to clients, credit notes for revenue adjustment, contra entries, advance payments, etc.) to recording of the accounting data |
| Invoicing for purchases | from receipt of the documents (invoices from suppliers, debit notes from clients, contra entries, advance payments, etc) to recording of the accounting data |
| Revenues without invoice | from receipt of the document relevant to the revenues to recording of the accounting data |
| Costs without invoice | from receipt of the document (expense accounts, fuel registration cards, etc.) to recording of the accounting data |
| Payments | from the issue/receipt of the document relevant to payments to recording of the accounting data |
| Sundry accounting entries | from issue/receipt of the document from those not indicated previously to recording of the accounting data |
| VAT | from settlement to payment |
| Social security institutions | from settlement until payment |
| Bank reconciliation | from analysis of operations to recording of the accounting data |
| Closing of accounts | from the accounting data to the settlement operations (depreciations, accruals and deferrals, invoices and documents to receive and issue, sums set aside, establishment of final left-overs, establishment of dues and taxes, etc.) for civil law and tax obligations |
| Opening of accounts | from the data concerning the previous tax year to opening operations. |

Illustrated below is a table in which processes are divided into sub-processes and sub-processes into activities that are appropriately coded.

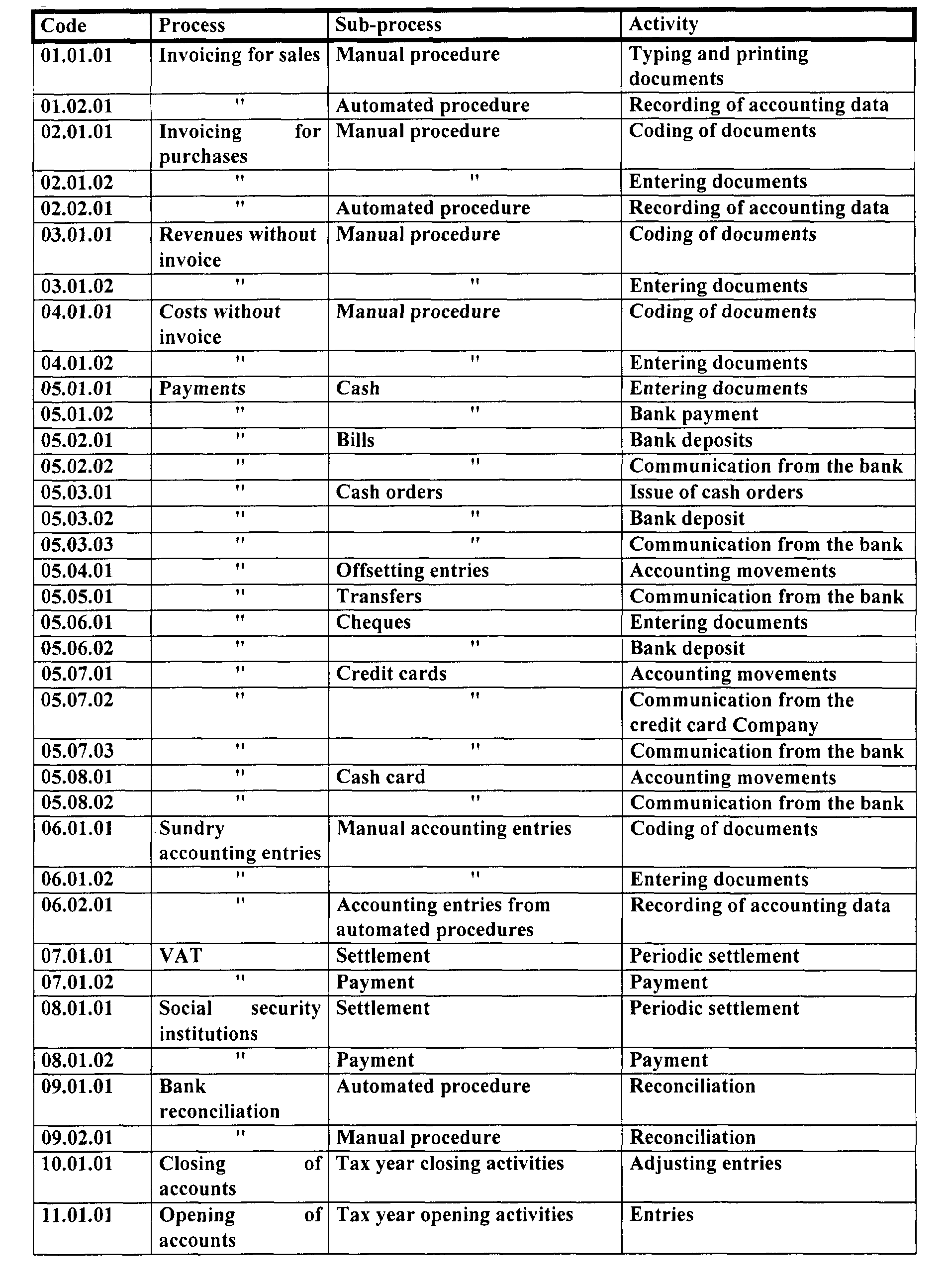

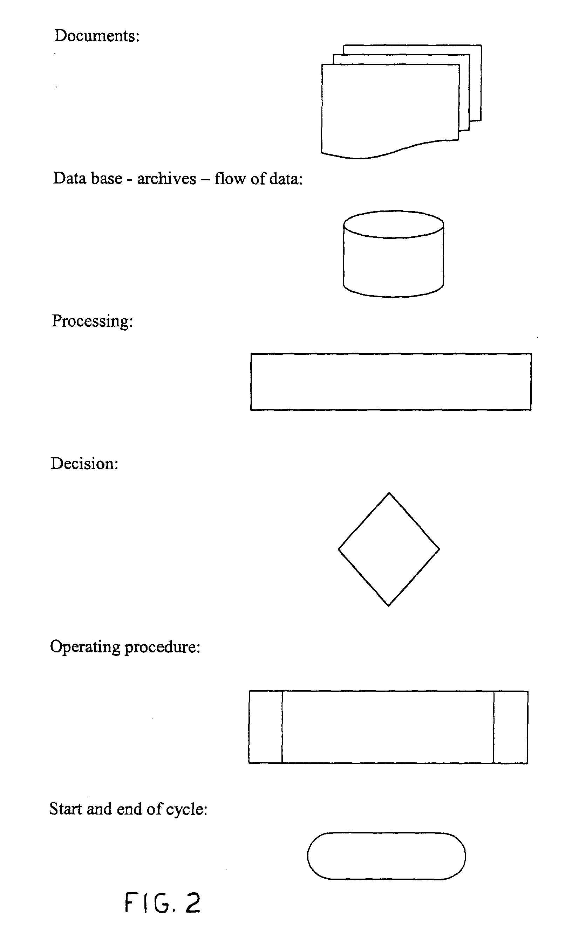

The processes will be described below through flow charts with the use of the symbology illustrated in Fig. 2.

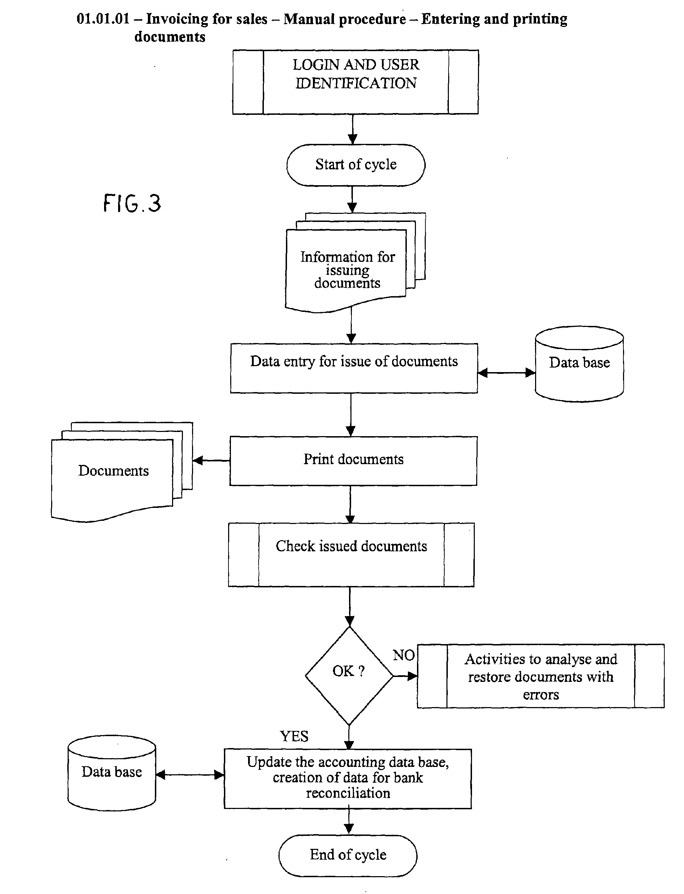

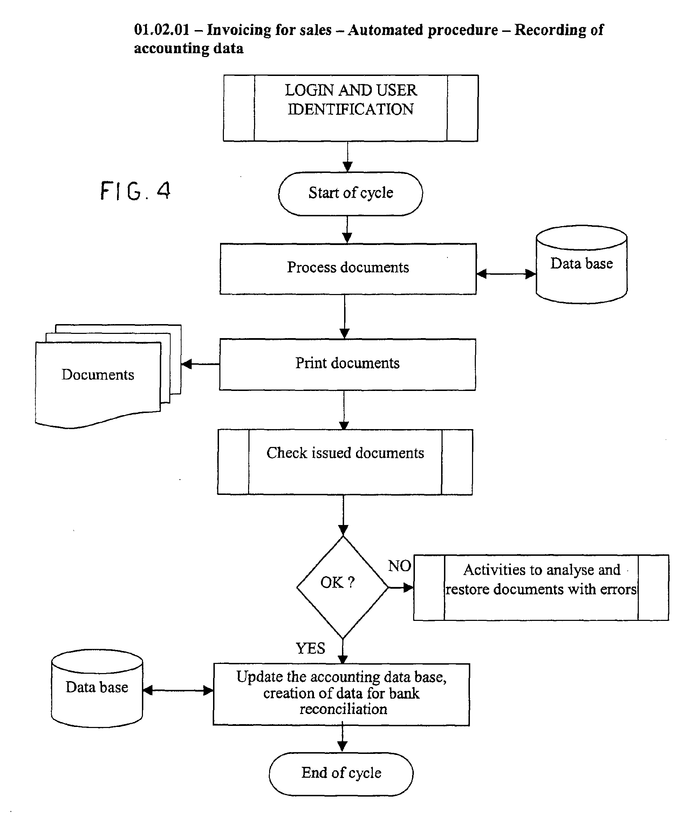

The invoicing process for sales is described with reference to Figs. 3 and 4.

### Invoicing for sales

| | |
|---|---|
| **Process** | **Invoicing for sales** |
| **Sub-process** | **Manual procedure** |
| **Activity** | **01.01.01 - Typing and printing documents** |
| Description | Entry of data relevant to documents to be issued (invoices to clients, credit notes for revenue adjustments, contra entries, advance payments, etc.), their printing and updating of the accounting data base, any preliminary updating of the data base for new situations |
| Input | information relevant to documents to be issued coming from business documents |
| Tasks and checks | Operator identification and authorisation, entering data relevant to documents to be issued, with indication of the relevant conditions of payment, document printing, checking documents issued and immediate updating of the accounting data base if the check is passed. |
| Means | Authorized accounting staff and PC as data processing media, also remote via the Internet or similar communication systems |
| Output | Printed documents, updating of the accounting data base and, if envisaged by the conditions of payment, creation and sending of accounting data and relevant keys of reference for the bank reconciliation environment |

| | |
|---|---|
| **Process** | **Invoicing for sales** |
| **Sub-process** | **Automated procedure** |
| **Activity** | **01.02.01 - Recording of accounting data** |
| Description | Recording of accounting data relevant to the flow of documents issued coming from other automated business procedures, any preliminary updating of the data base for new situations |
| Input | Flow of invoicing data in electronic format coming from other automated business procedures |
| Tasks and checks | Operator identification and authorisation, performance of the procedure for issuing documents, document printing, checking documents issued and immediate updating of the accounting data base if the check is passed. |
| Means | Authorized accounting staff and PC as data processing media, also remote via the Internet or similar communication systems |
| Output | Printed documents, updating of the accounting data base and, if envisaged by the conditions of payment, creation and sending of accounting data and relevant keys of reference for the bank reconciliation environment |

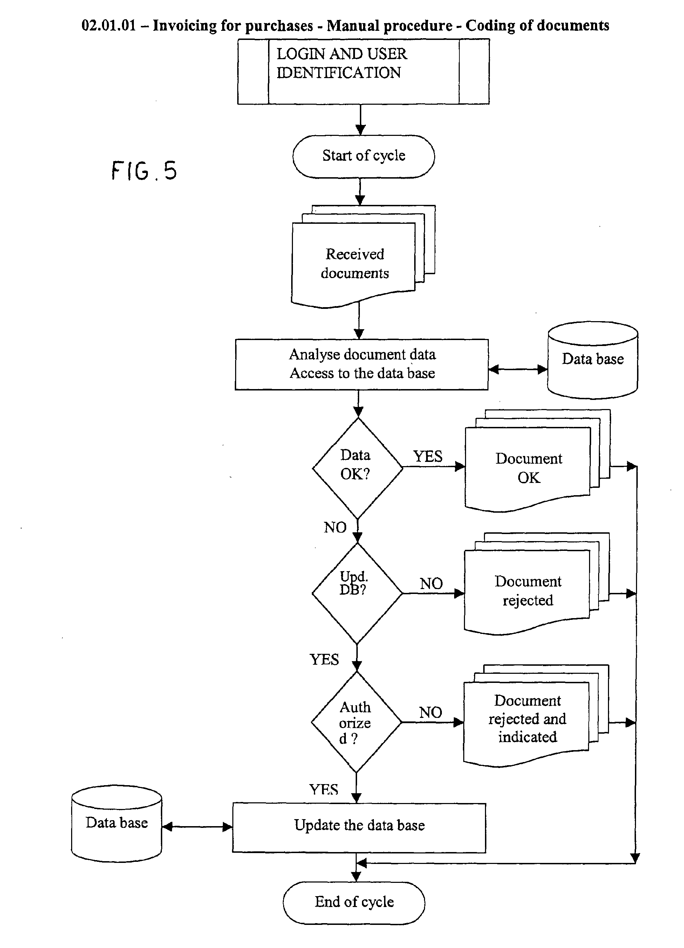

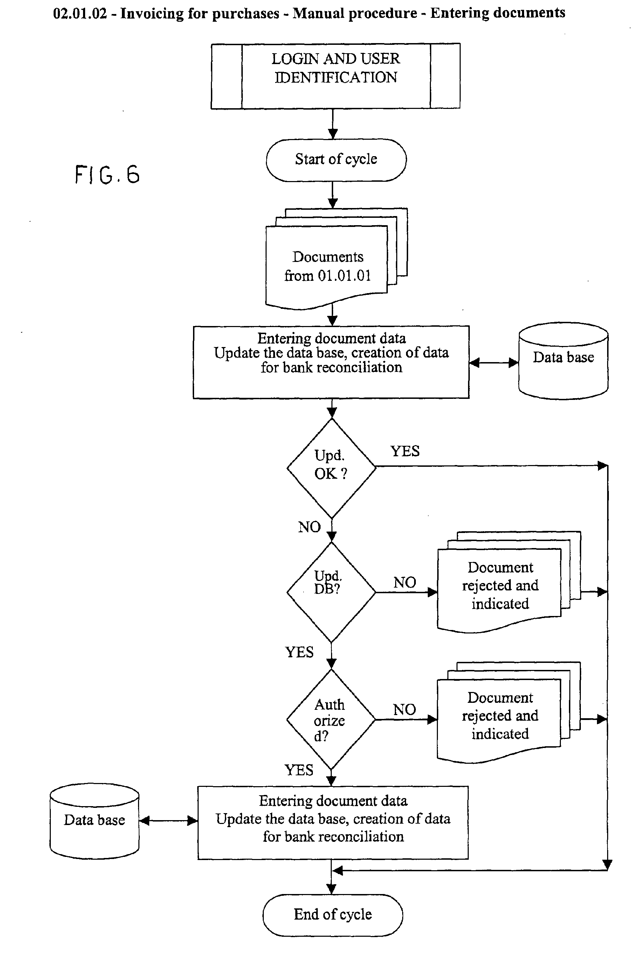

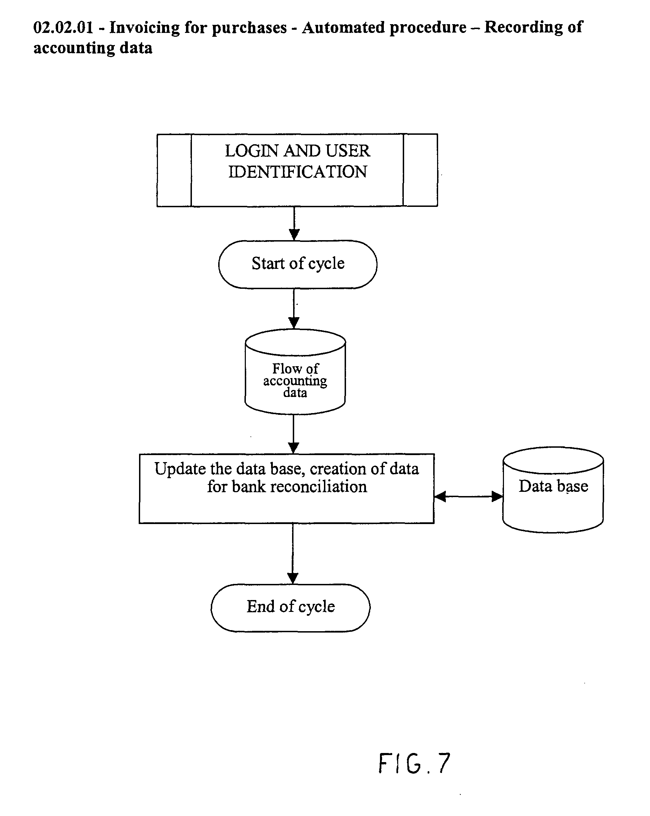

The invoicing process for purchases is described with the aid of Figs. 5, 6 and 7

### Invoicing for purchases

| | |
|---|---|
| **Process** | **Invoicing for purchases** |
| **Sub-process** | **Manual procedure** |
| **Activity** | **02.01.01 - Coding of documents** |
| Description | Collection of debit invoices and other documents relevant to purchases (also debit notes from client, credit notes for adjustment of costs, contra entries, advance payments, etc.) and their coding for typing data, any preliminary updating of the data base for new situations |
| Input | Information relevant to invoices and documents received |
| Tasks and checks | Operator identification and authorisation, checking congruity of the information content of invoices and documents received through information recorded in the data base with coding of values and rejection of documents that did not pass checks (for subsequent revision of these) |
| Means | Authorized accounting staff and PC as data processing media, also remote via the Internet or similar communication systems |
| Output | Invoices accepted and coded for subsequent recording of data in the accounting system, any updating of the data base |

| | |
|---|---|
| **Process** | **Invoicing for purchases** |
| **Sub-process** | **Manual procedure** |
| **Activity** | **02.01.02 - Entering documents** |
| Description | Entry of data relevant to debit invoices and documents and updating of the accounting data base |
| Input | Invoices coming from the activity 02.01.01 "Coding of documents" that passed the check and have been coded |
| Tasks and checks | Operator identification and authorisation, entering data relevant to invoices and documents received, with indication of the relevant conditions of payment and immediate updating of the accounting data base |
| Means | Authorized accounting staff and PC as data processing media, also remote via the Internet or similar communication systems |
| Output | Updating of the accounting data base and, if envisaged by the conditions of payment, creation and sending of accounting data and relevant keys of reference for the bank reconciliation environment |

| | |
|---|---|
| **Process** | **Invoicing for purchases** |
| **Sub-process** | **Automated procedure** |
| **Activity** | **02.02.01 - Recording of accounting data** |
| Description | Recording of accounting data relevant to the flow of debit invoices and documents coming from other automated business procedures |
| Input | Flow of invoicing data in electronic format coming from other automated business procedures |
| Tasks and checks | Operator identification and authorisation, performance of the automatic procedure to record data from debit invoices and documents and immediate updating of the accounting data base |
| Means | Authorized accounting staff and PC as data processing media, also remote via the Internet or similar communication systems |
| Output | Updating of the accounting data base and, if envisaged by the conditions of payment, creation and sending of accounting data and relevant keys of reference for the bank reconciliation environment |

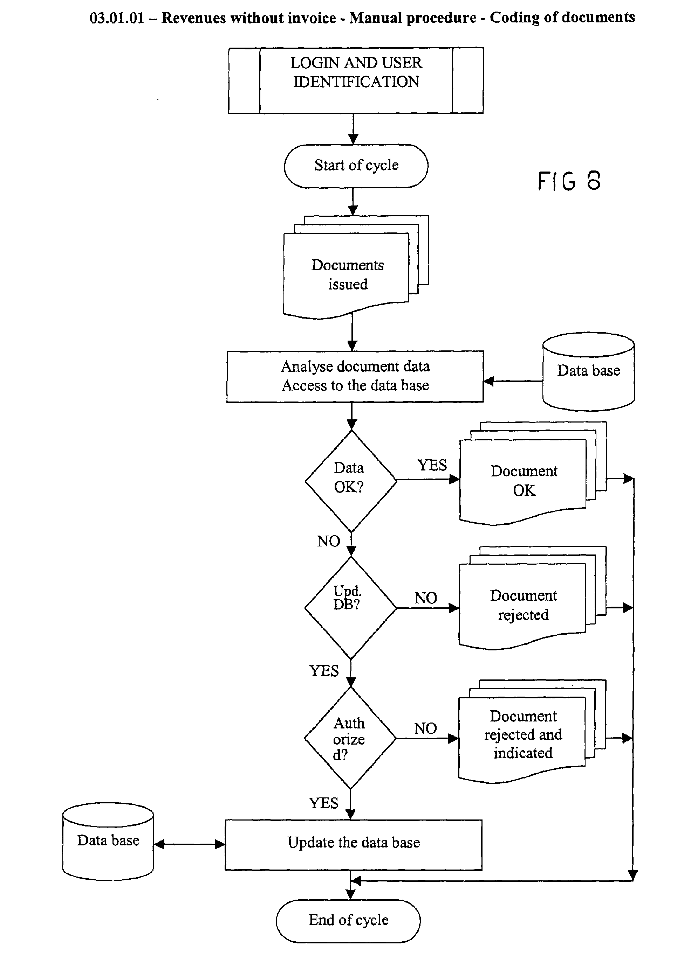

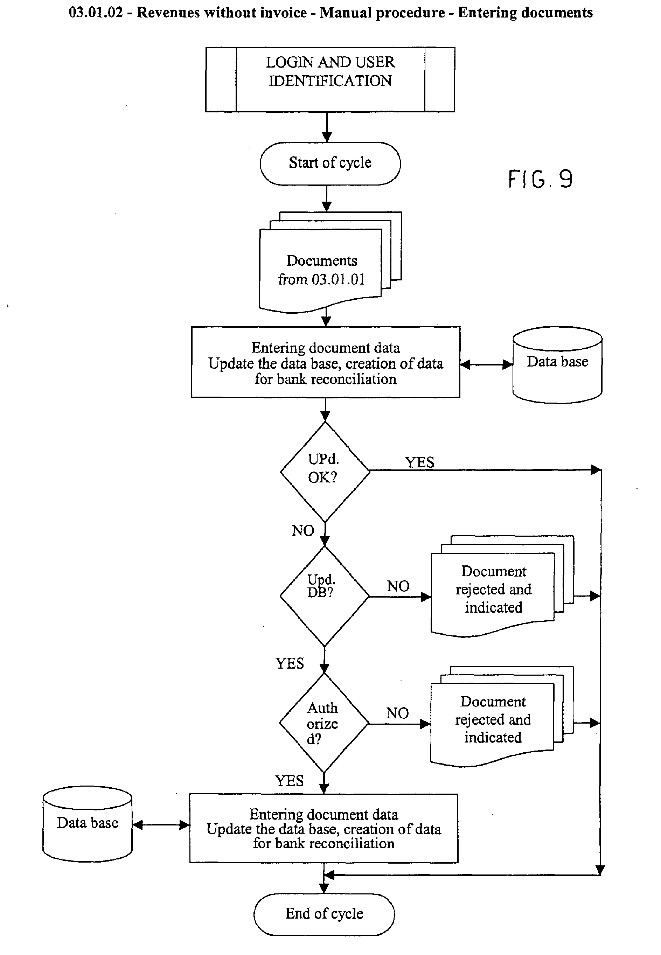

The revenues process without invoice is described with the aid of Figs. 8 and 9.

### Revenues without invoice

| | |
|---|---|
| **Process** | **Revenues without invoice** |
| **Sub-process** | **Manual procedure** |
| **Activity** | **03.01.01 - Coding of documents** |
| Description | Collection of documents and their coding for entering data, any preliminary updating of the data base for new situations |
| Input | Information relevant to documents received |
| Tasks and checks | Operator identification and authorisation, checking congruity of the information content of invoices and documents received through information recorded in the data base with coding of values and rejection of documents that did not pass checks (for subsequent revision of these) |
| Means | Authorized accounting staff and PC as data processing media, also remote via the Internet or similar communication systems |
| Output | Documents accepted and coded for subsequent entering of data in the accounting system, any updating of the data base |

| | |
|---|---|
| **Process** | **Revenues without invoice** |
| **Sub-process** | **Manual procedure** |
| **Activity** | **03.01.02 - Entering documents** |
| Description | Entry of data relevant to the documents and updating of the accounting data |
| Input | Invoices coming from the activity 03.01.01 "Coding of documents" that passed the check and have been coded |
| Tasks and checks | Operator identification and authorisation, entering data relevant to documents issued, with indication of the relevant conditions of payment and immediate updating of the accounting data base |
| Means | Authorized accounting staff and PC as data processing media, also remote via the Internet or similar communication systems |
| Output | Updating of the accounting data base and, if envisaged by the conditions of payment, creation and sending of accounting data and relevant keys of reference for the bank reconciliation environment |

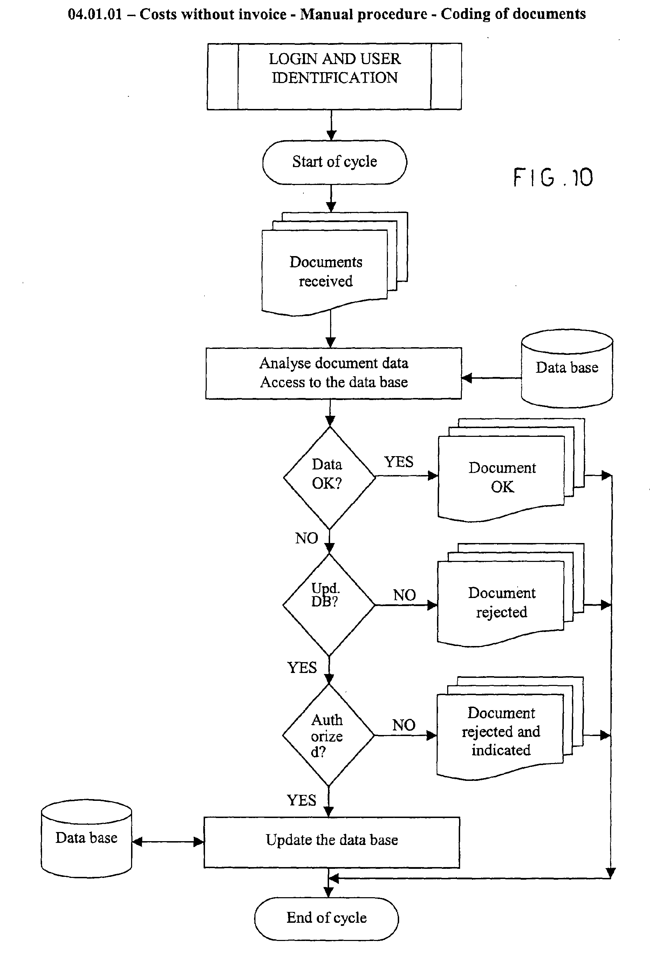

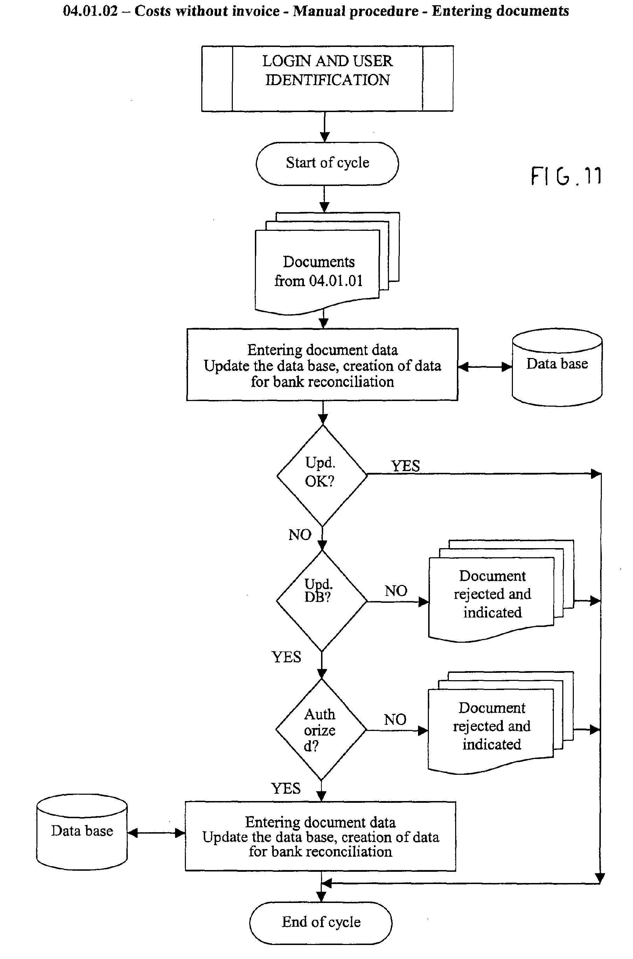

The costs process without invoice is described with the aid of Figs. 10 and 11.

### Costs without invoice

| | |
|---|---|
| **Process** | **Costs without invoice** |
| **Sub-process** | **Manual procedure** |
| **Activity** | **04.01.01 - Coding of documents** |
| Description | Collection of documents (i.e. expense accounts, fuel registration cards, etc.) and their coding for entering data, any preliminary updating of the data base for new situations |
| Input | Information relevant to documents received |
| Tasks and checks | Operator identification and authorisation, checking congruity of the information content of documents received through information recorded in the data base with coding of values and rejection of documents that did not pass checks (for subsequent revision of these) |
| Means | Authorized accounting staff and PC as data processing media, also remote via the Internet or similar communication systems |
| Output | Documents accepted and coded for subsequent recording of data in the accounting system, any updating of the data base |

| | |
|---|---|
| **Process** | **Costs without invoice** |
| **Sub-process** | **Manual procedure** |
| **Activity** | **04.01.02 - Entering documents** |
| Description | Entry of data relevant to the documents and updating of the accounting data |
| Input | Invoices coming from the activity 04.01.01 "Coding of documents" that passed the check and have been coded |
| Tasks and checks | Operator identification and authorisation, entering data relevant to documents issued, with indication of the relevant conditions of payment and immediate updating of the accounting data base |
| Means | Authorized accounting staff and PC as data processing media, also remote via the Internet or similar communication systems |
| Output | Updating of the accounting data base and, if envisaged by the conditions of payment, creation and sending of accounting data and relevant keys of reference for the bank reconciliation environment |

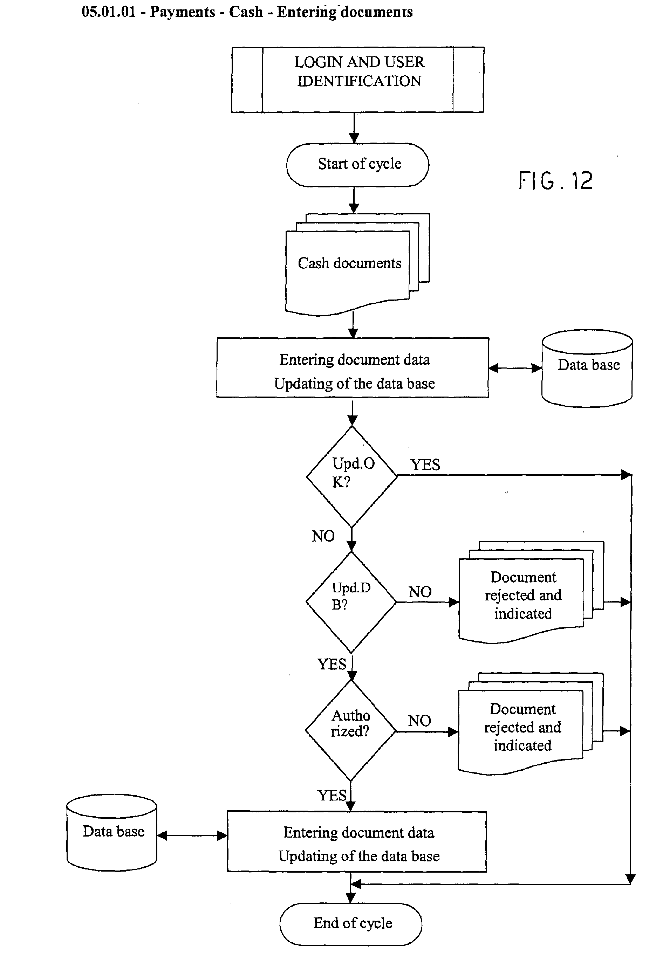

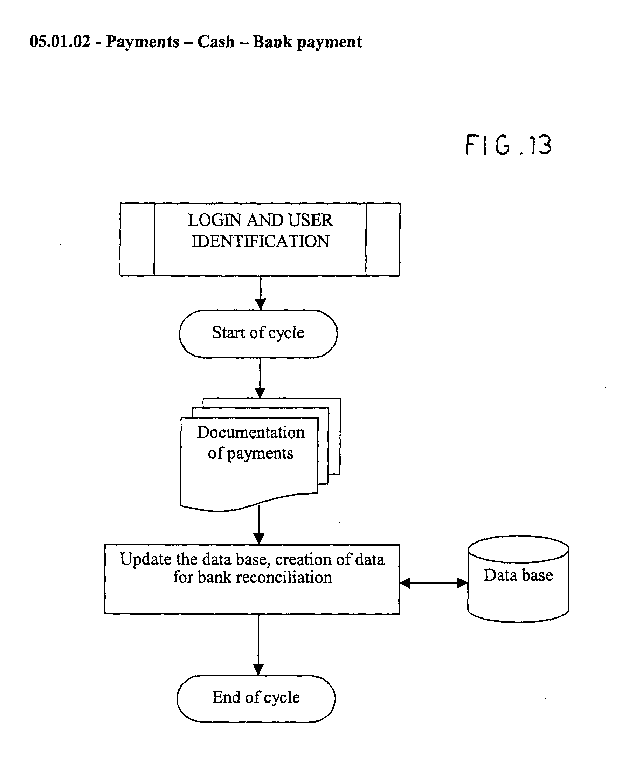

The sub-process for cash payments is described with the aid of Figs. 12 and 13.

### Payments - Cash

| | |
|---|---|
| **Process** | **Payments** |
| **Sub-process** | **Cash** |
| **Activity** | **05.01.01 - Entering documents** |
| Description | Entry of data relevant to the payment documents and updating of the accounting data, any preliminary updating of the data base for new situations |
| Input | Documents relevant to cash receipts and disbursements |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base |

| | |
|---|---|
| **Process** | **Payments** |
| **Sub-process** | **Cash** |
| **Activity** | **05.01.02 - Deposit in the bank** |
| Description | Entry of data relevant to the deposit of cash in the bank |
| Input | Documents relevant to cash deposited |
| Tasks and checks | Operator identification and authorisation, entering data relevant to deposits made and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

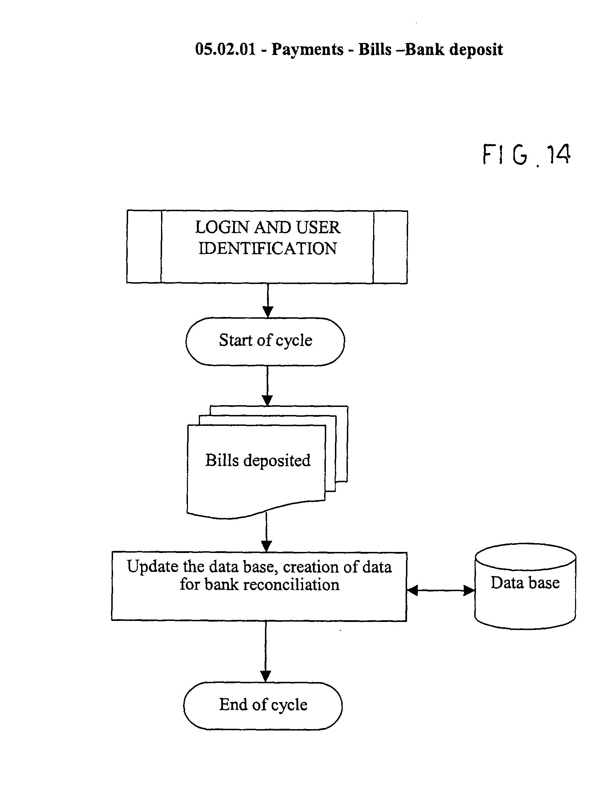

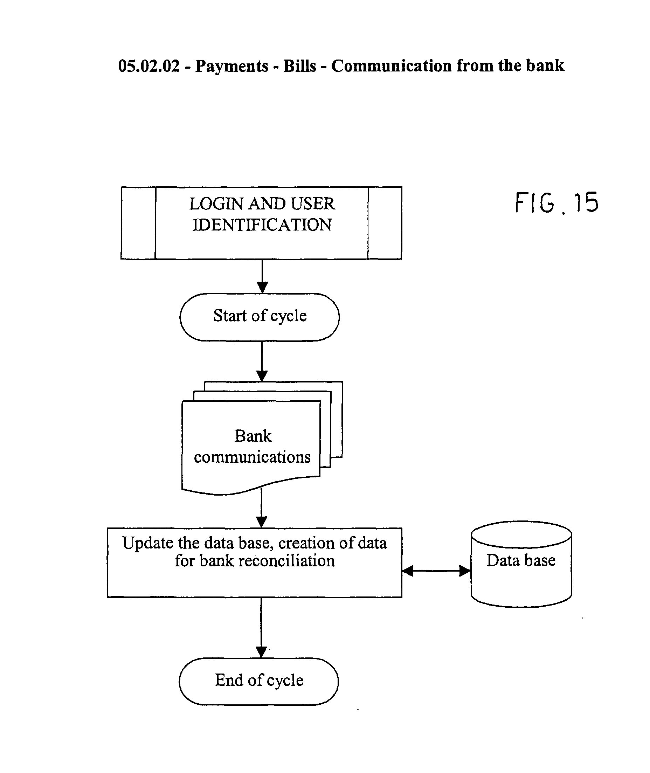

The sub-process for payments of bills is described with the aid of Figs. 14 and 15.

### Payments - Bills

| | |
|---|---|
| **Process** | **Payments** |
| **Sub-process** | **Bills** |
| **Activity** | **05.02.01 - Deposit in the bank** |
| Description | Entry of data relevant to the deposit of bills in the bank |
| Input | Documents relevant to bills deposited |
| Tasks and checks | Operator identification and authorisation, entering data relevant to bills deposited and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Bills** |
| **Activity** | **05.02.02 - Communication from the bank** |
| Description | Entry of data relevant to the bank communication concerning bills previously deposited in the bank |
| Input | Documents concerning the bank communication |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

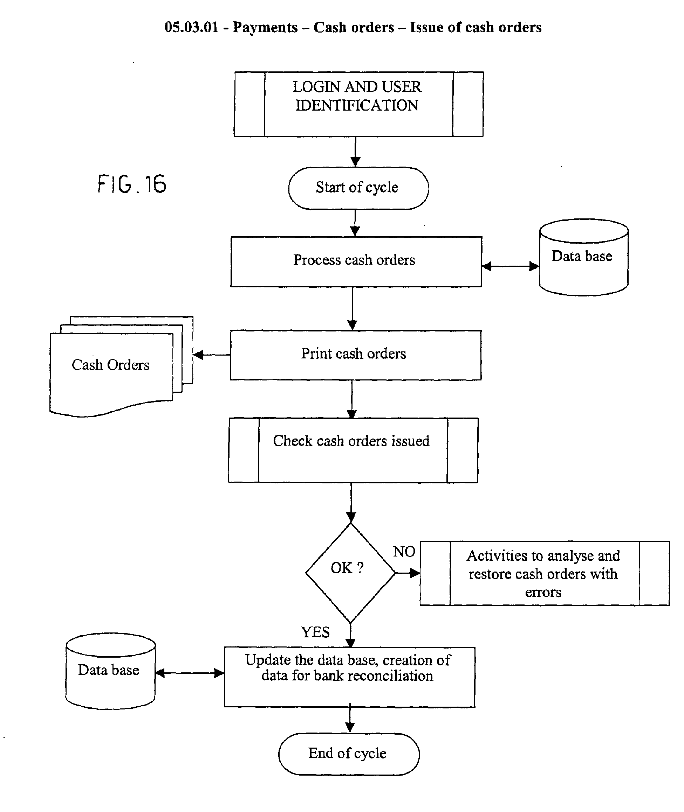

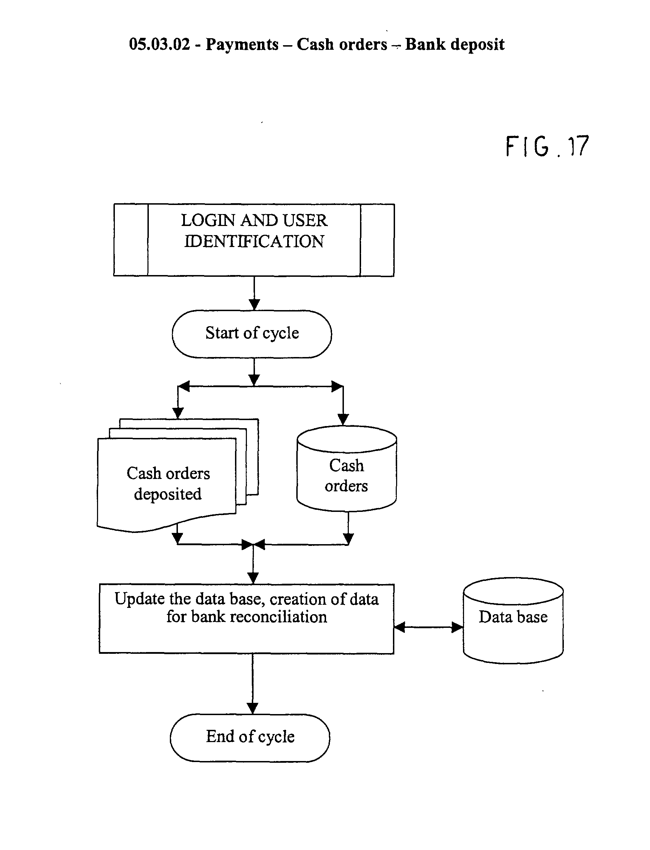

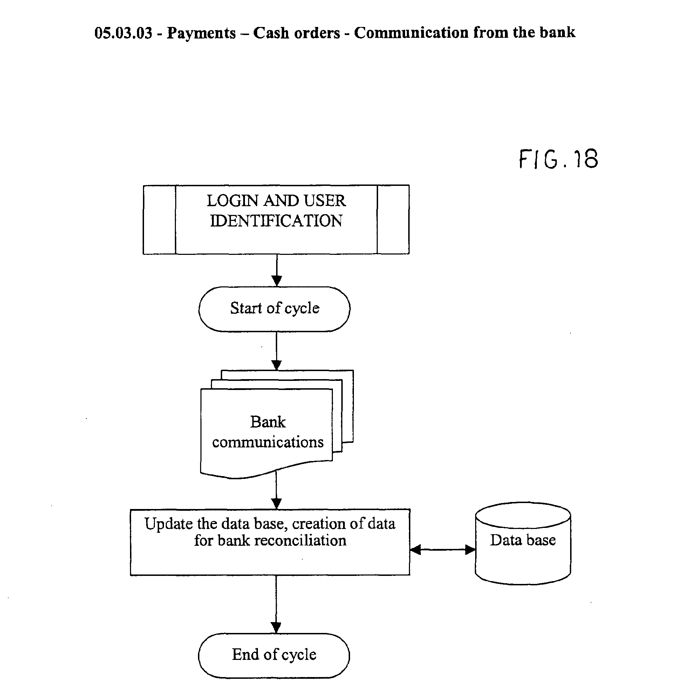

The sub-process for payments of cash orders is described with the aid of Figs. 16, 17 and 18.

### Payments - Cash Orders

| | |
|---|---|
| **Process** | **Payments** |
| **Sub-process** | **Cash Orders** |
| **Activity** | **05.03.01 - Issue of Cash Orders** |
| Description | Issue of the cash order in electronic and/or manual format |
| Input | Information relevant to the cash orders to issue coming from business documents |
| Tasks and checks | Operator identification and authorisation, entering data relevant to the cash orders to issue and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Cash Orders** |
| **Activity** | **05.03.02 - Deposit in the bank** |
| Description | Entry of data relevant to the deposit or transmission of cash orders to the bank |
| Input | Documents concerning cash orders transmitted |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment; any flow of cash orders for the bank |

| | |
|---|---|
| **Process** | **Payments** |
| **Sub-process** | **Cash Orders** |
| **Activity** | **05.03.03 - Communication from the bank** |
| Description | Entry of data relevant to the bank communication concerning confirmation of cash orders previously transmitted to the bank |
| Input | Documents concerning bank communication |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

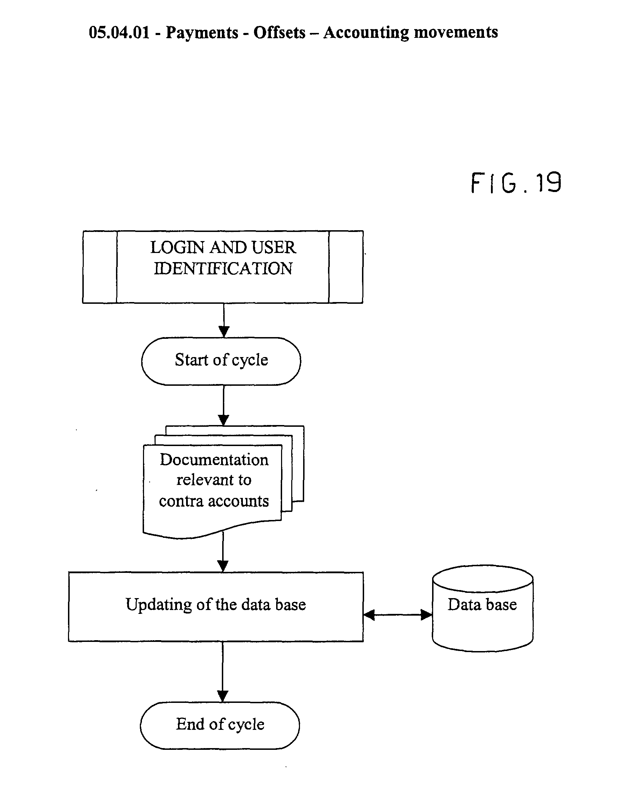

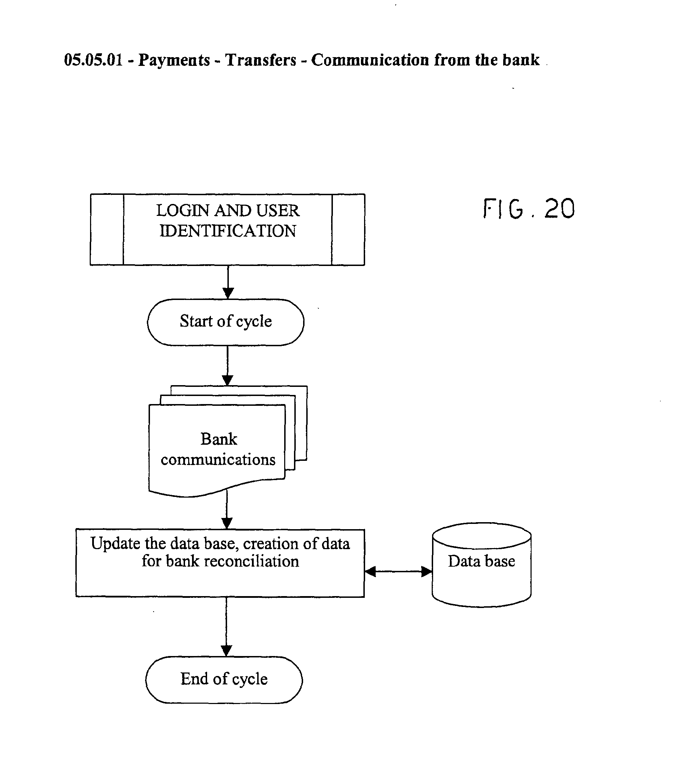

The sub-processes for payments of offsetting entries and transfers are described with the aid of Figs. 19 and 20.

### Payments - Offsetting entries

| | |
|---|---|
| **Process** | **Payments** |
| **Sub-process** | **Offsetting entry** |
| **Activity** | **05.04.01 - Accounting movements** |
| Description | Entry of data relevant to contra accounts between suppliers and clients and updating of credit and/or debit situations |
| Input | Documents concerning contra accounting of items |
| Tasks and checks | Operator identification and authorisation, entering data relevant to contra accounting and immediate updating of the accounting data base |
| Means | Authorized accounting staff and PC as data processing media, also remote via the Internet or similar communication systems |
| Output | Updating of the accounting data base |

### Payments - Transfers

| | |
|---|---|
| **Process** | **Payments** |
| **Sub-process** | **Transfers** |
| **Activity** | **05.05.01 - Communication from the bank** |
| Description | Entry of data relevant to the bank communication concerning transfers |
| Input | Documents concerning bank communication |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

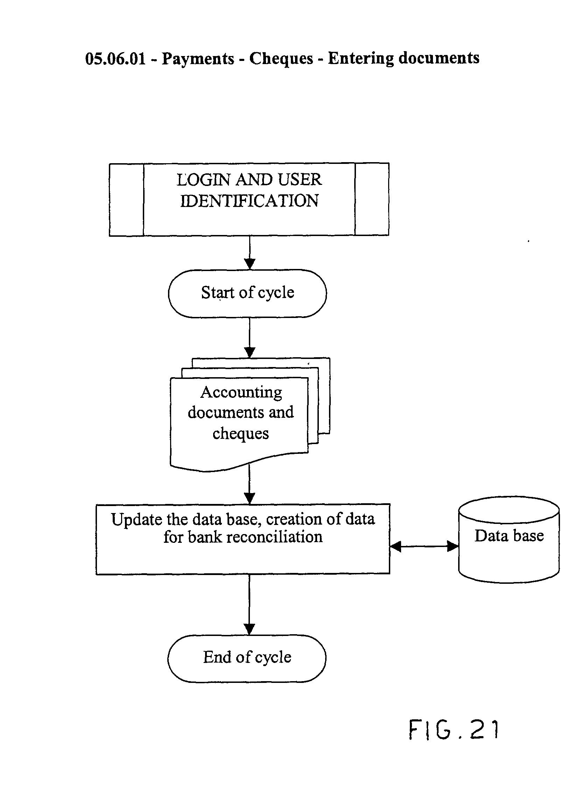

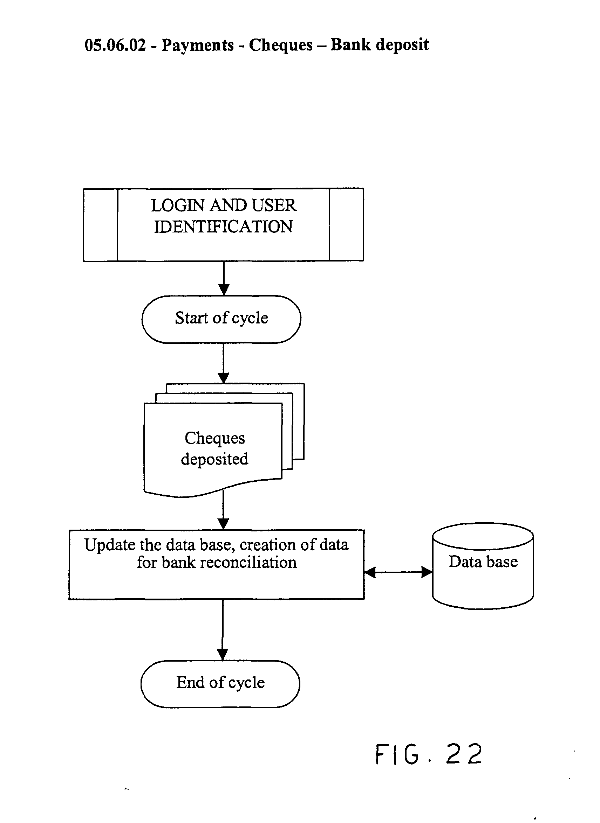

The sub-process for payments of cheques is described with the aid of Figs. 21 and 22

### Payments - Cheques

| | |
|---|---|
| **Process** | **Payments** |
| **Sub-process** | **Cheques** |
| **Activity** | **05.06.01 - Entering documents** |
| Description | Entry of data relevant to the cheques issued or received and updating of the accounting data base |
| Input | Accounting documents and cheques issued or received |
| Tasks and checks | Operator identification and authorisation, entering data relevant to documents and cheques and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Cheques** |
| **Activity** | **05.06.02 - Deposit in the bank** |
| Description | Entry of data relevant to the deposit of cheques received in the bank |
| Input | Documents concerning cheques deposited |
| Tasks and checks | Operator identification and authorisation, entering data relevant to cheques deposited and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment; any flow of cash orders for the bank |

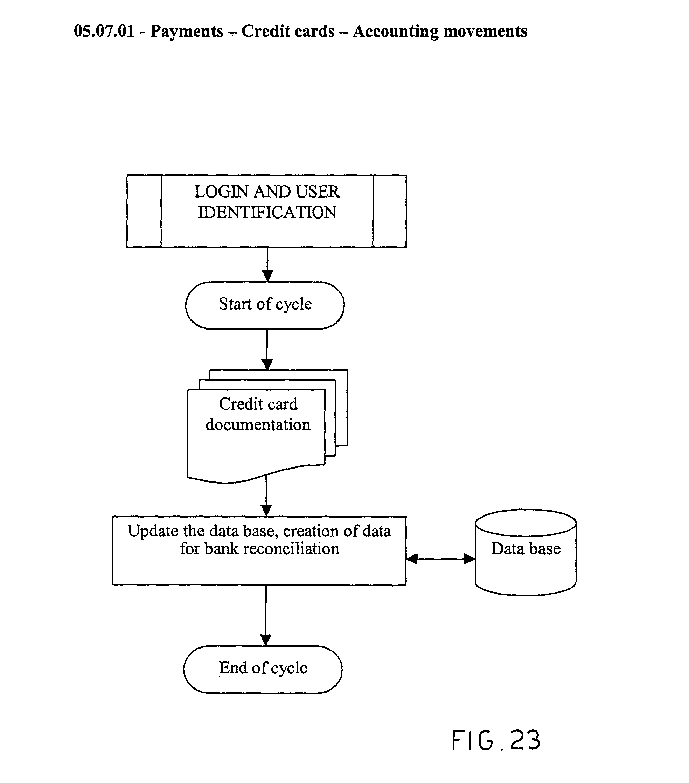

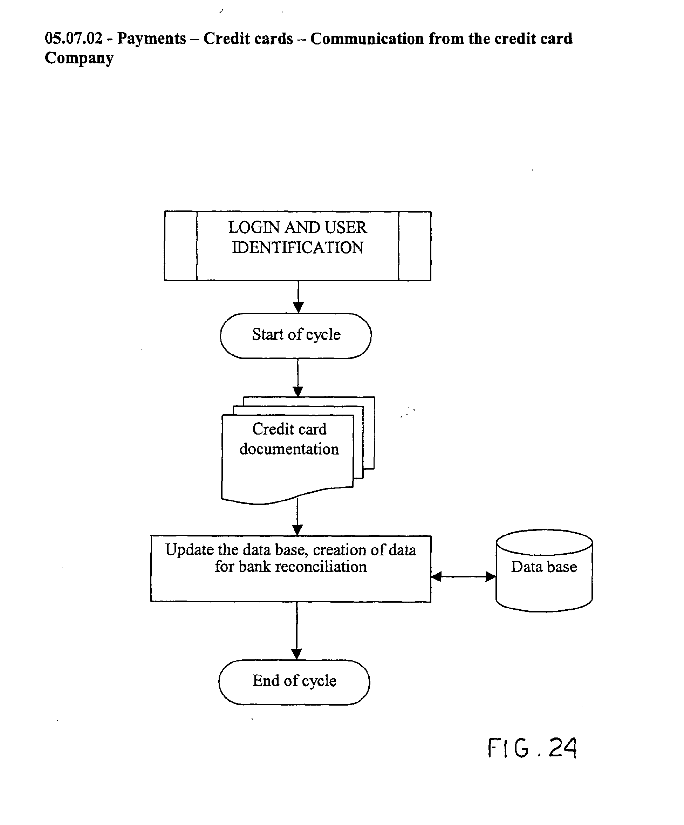

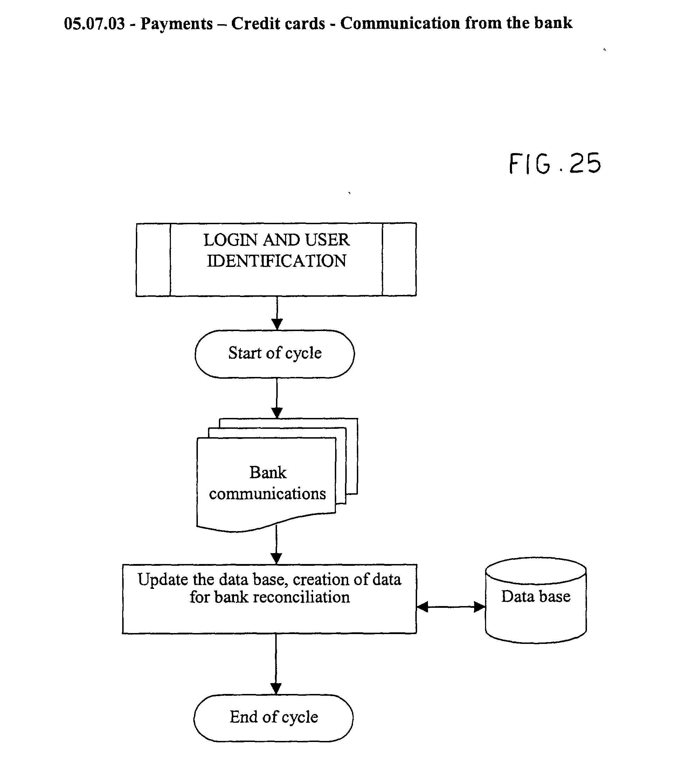

The sub-process for credit card payments is described with the aid of Figs. 23, 24 and 25

### Payments - Credit cards

| | |
|---|---|
| **Process** | **Payments** |
| **Sub-process** | **Credit cards** |
| **Activity** | **05.07.01 - Cash movements** |
| Description | Entry of data relevant to credit cards |
| Input | Documentation concerning credit cards |
| Tasks and checks | Operator identification and authorisation, entering data relevant to credit cards and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Credit cards** |
| **Activities** | **05.07.02 - Communication from the Credit Card Company** |
| Description | Entry of data relevant to the communication from the Credit Card Company |
| Input | Documents concerning communication relevant to credit cards |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Credit cards** |
| **Activity** | **05.07.03 - Communication from the bank** |
| Description | Entry of data relevant to the bank communication concerning credits for credit cards |
| Input | Documents concerning bank communication |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

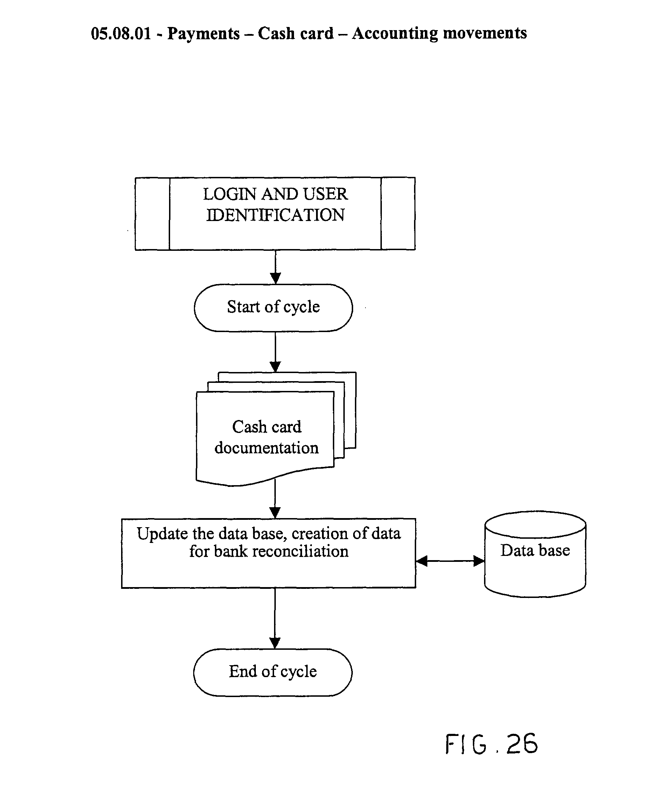

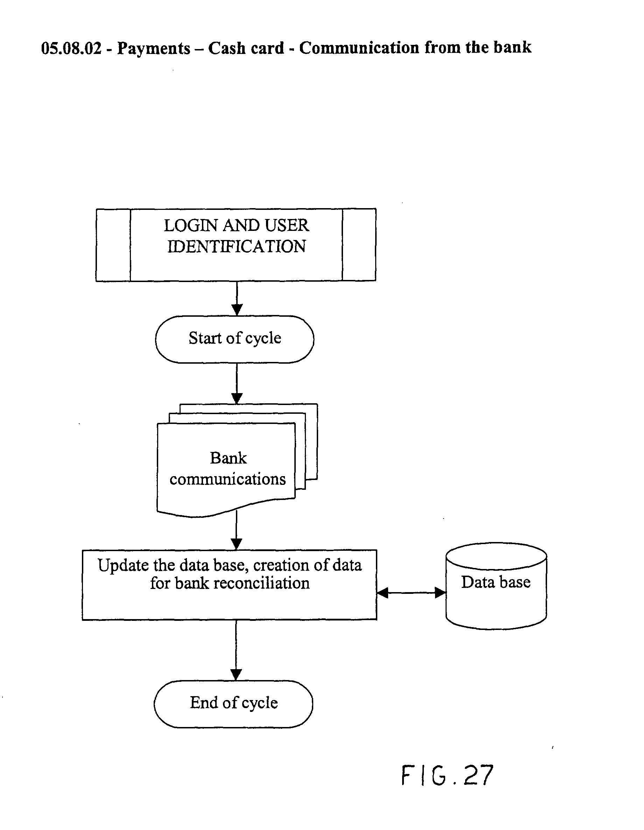

The sub-process for cash card payments is described with the aid of Figs. 26 and 27

### Payments - Cash card

| | |
|---|---|
| **Process** | **Payments** |
| **Sub-process** | **Cash card** |
| **Activity** | **05.08.01 - Cash movements** |
| Description | Entry of data relevant to cash card movements |
| Input | Documentation concerning cash cards |
| Tasks and checks | Operator identification and authorisation, entering data relevant to cash cards and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

| | |
|---|---|
| **Process** | **Payments** |
| **Sub-process** | **Cash cards** |
| **Activity** | **05.08.02 - Communication from the bank** |
| Description | Entry of data relevant to the bank communication concerning credit operations for cash cards |
| Input | Documents concerning bank communication |
| Tasks and checks | Operator identification and authorisation, entering data relevant to documents received and immediate updating of the accounting data base |
| Means | Authorized accounting staff and PC as data processing media, also remote via the Internet or similar communication systems |
| Output | Updating of the accounting data base and creation and sending of accounting data and relevant keys of reference for the bank reconciliation environment |

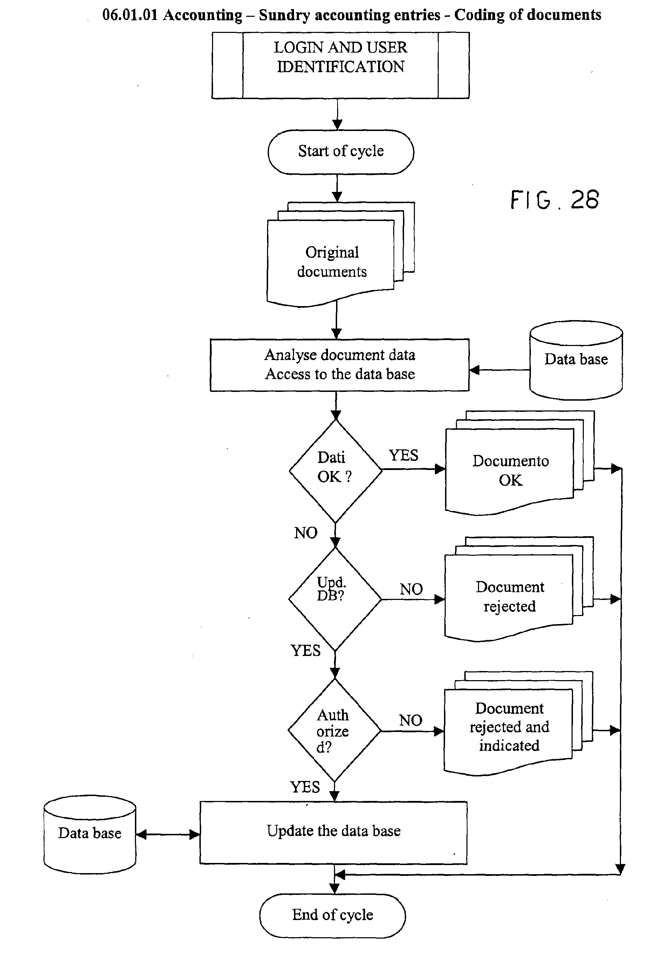

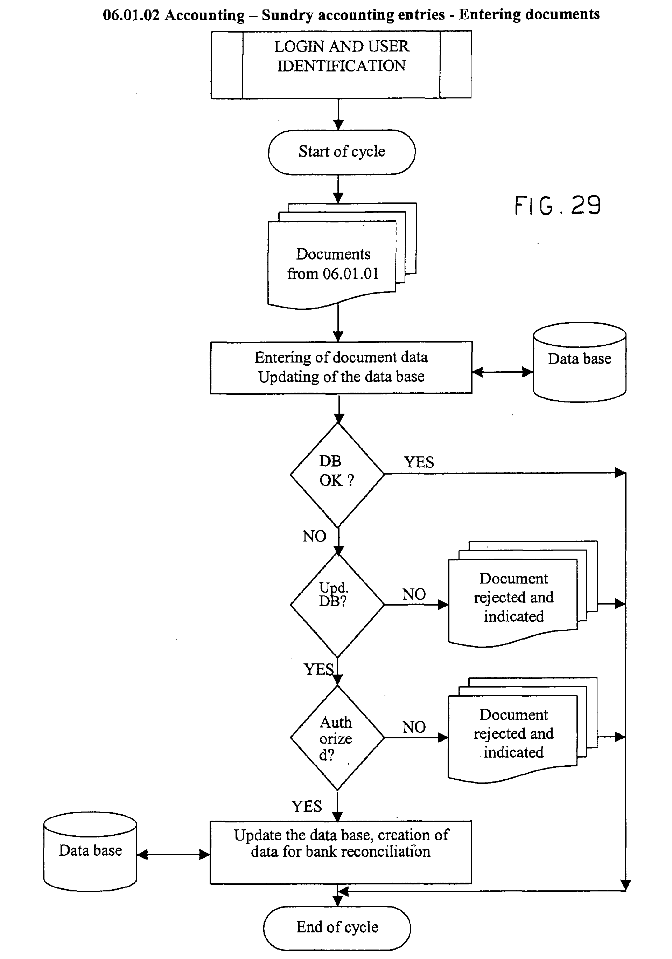

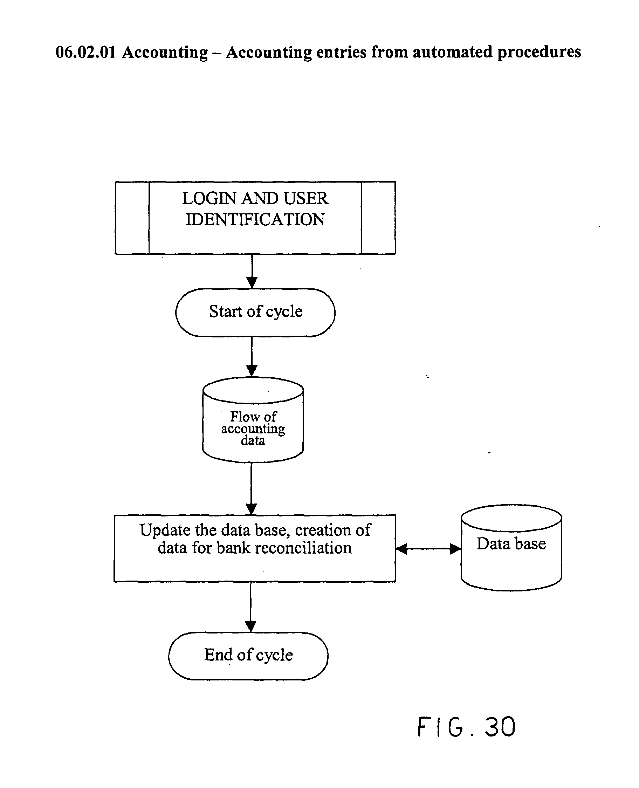

The process for sundry accounting entries is described with the aid of Figs. 28, 29 and 30. Sundry accounting entries are intended as accounting entries concerning: internal fund financing, outside fund financing, tangible asset investments, intangible asset investments, financial investments, public contributions, memorandum accounts, contingent assets and liabilities, capital gains and losses.

### Sundry accounting entries - manual

| | |
|---|---|
| **Process** | **Accounting** |
| **Sub-process** | **Manual accounting entries** |
| **Activity** | **06.01.01 - Coding of documents** |
| Description | Collection of accounting documents and their coding for entering data, any preliminary updating of the data base for new situations |
| Input | Documents relevant to the activities of the enterprise/professional subject to the accounting entry, coming from external bodies and from within the enterprise/professional and collected in the period |
| Tasks and checks | Checking congruity of the information content of documents received through information recorded in the data base with coding of values and rejection of documents that did not pass checks (for subsequent revision of these) |
| Means | Authorized accounting staff and PC as data processing media, also remote via the Internet or similar communication systems |
| Output | Documents accepted and coded for subsequent entry of data in the accounting system, any updating of the data base |

| | |
|---|---|
| **Process** | **Accounting** |
| **Sub-process** | **Manual accounting entries** |
| **Activity** | **06.01.02 - Entering documents** |
| Description | Entering data from checked and coded accounting documents |
| Input | Documents coming from the activity 06.01.01 "Coding of documents" that passed the check and have been coded |
| Tasks and checks | entering data in the processor according to the path and sequence indicated on the screen |
| Means | Authorized accounting staff and PC as data processing media, also remote via the Internet or similar communication systems |
| Output | Updating of the accounting data base and creation and sending of accounting data and relevant keys of reference for the bank reconciliation environment |

### Sundry accounting entries - automated

| | |
|---|---|
| **Process** | **Accounting** |
| **Sub-process** | **Accounting entries from automated procedures** |
| **Activity** | **06.02.01 - Recording of accounting data** |
| Description | Recording of accounting data coming from other automated business procedures |
| Input | Flow of accounting data in electronic format coming from other automated business procedures |
| Tasks and checks | Supervised entry of data in the processor according to the path and sequence envisaged by the automated procedure |
| Means | Authorized accounting staff and central data processing media |
| Output | Updating of the accounting data base and creation and sending of accounting data and relevant keys of reference for the bank reconciliation environment |

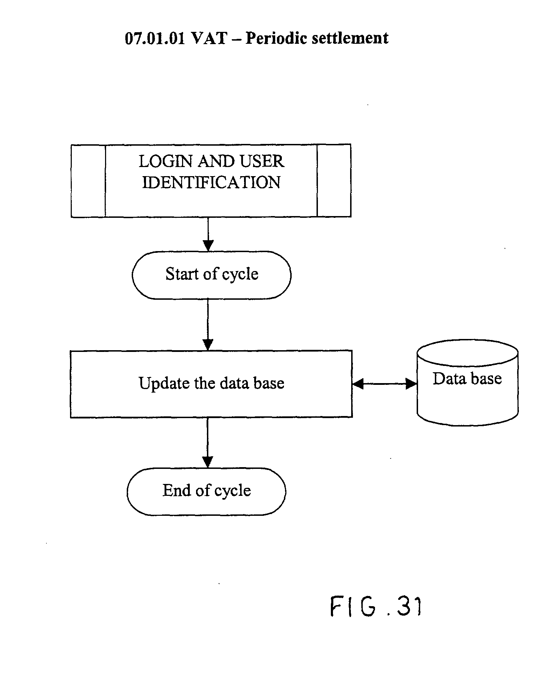

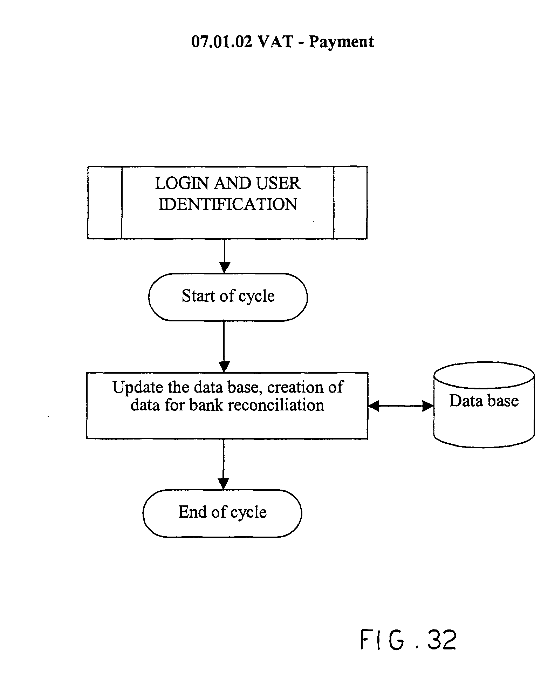

The VAT process is described with the aid of Figs. 31 and 32.

### VAT

| | |
|---|---|
| **Process** | **VAT** |
| **Sub-process** | **Settlement** |
| **Activity** | **07.01.01 - Periodic settlement** |
| Description | Periodic settlement of VAT |
| Input | Accounting data recorded in the accounting data base concerning VAT accounts |
| Tasks and checks | Supervised entry of data in the processor according to the path and sequence envisaged by the automated procedure |
| Means | Authorized accounting staff and PC as central data processing media |
| Output | Updating of the accounting data base |

| | |
|---|---|
| **Process** | **VAT** |
| **Sub-process** | **Payment** |
| **Activity** | **07.01.02 - Payment** |
| Description | Production of information concerning VAT payment |
| Input | Accounting data recorded in the accounting data base concerning VAT accounts and coming from the activity 07.01.01 "VAT Settlement" |
| Tasks and checks | Supervised entry of data in the processor according to the path and sequence envisaged by the automated procedure, with checking against the result of the previous activity 07.01.01 |
| Means | Authorized accounting staff and PC as central data processing media |
| Output | Updating of the accounting data base and creation and sending of accounting data and relevant keys of reference for the bank reconciliation environment |

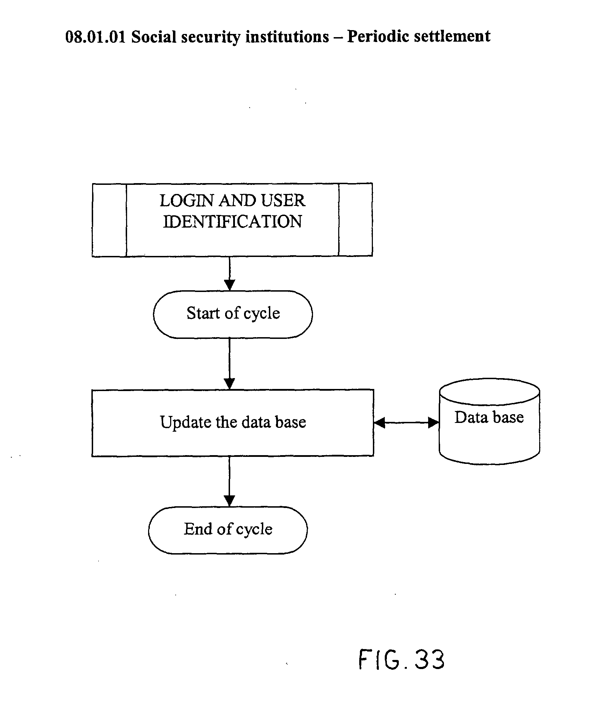

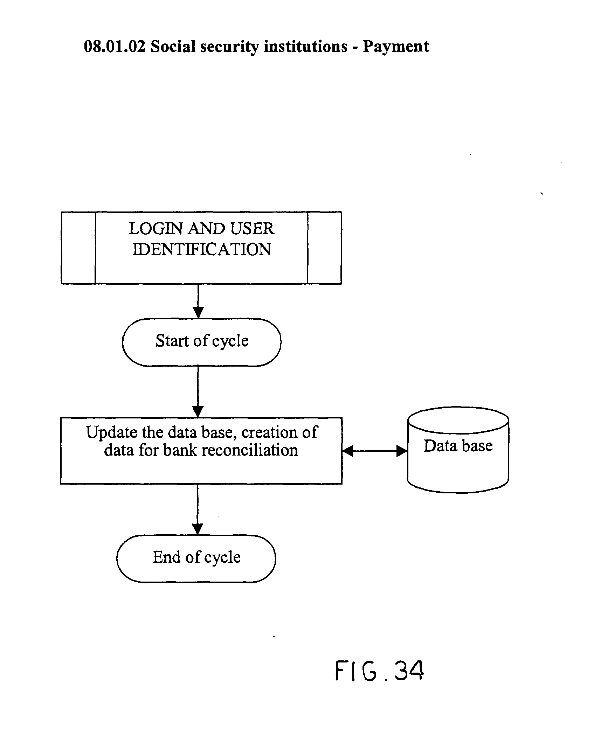

The social security institutions process is described with the aid of Figs. 33 and 34.

### SOCIAL SECURITY INSTITUTIONS

| | |
|---|---|
| **Process** | **Social security bodies** |
| **Sub-process** | **Settlement** |
| **Activity** | **08.01.01 - Periodic settlement** |
| Description | Periodic settlement of social security institutions |
| Input | Accounting data recorded in the accounting data base concerning social security institution accounts |
| Tasks and checks | Supervised entry of data in the processor according to the path and sequence envisaged by the automated procedure |
| Means | Authorized accounting staff and PC as central data processing media |
| Output | Updating of the accounting data base |

| | |
|---|---|
| **Process** | **Social security institutions** |
| **Sub-process** | **Payment** |
| **Activity** | **08.01.02 - Payment** |
| Description | Production of information concerning social security institution payment |
| Input | Accounting data recorded in the accounting data base concerning social security institution accounts and coming from the activity 08.01.01 "Social security institution Settlement" |
| Tasks and checks | Supervised entry of data in the processor according to the path and sequence envisaged by the automated procedure, with checking against the result of the previous activity 08.01.01 |
| Means | Authorized accounting staff and PC as central data processing media |
| Output | Updating of the accounting data base and creation and sending of accounting data and relevant keys of reference for the bank reconciliation environment |

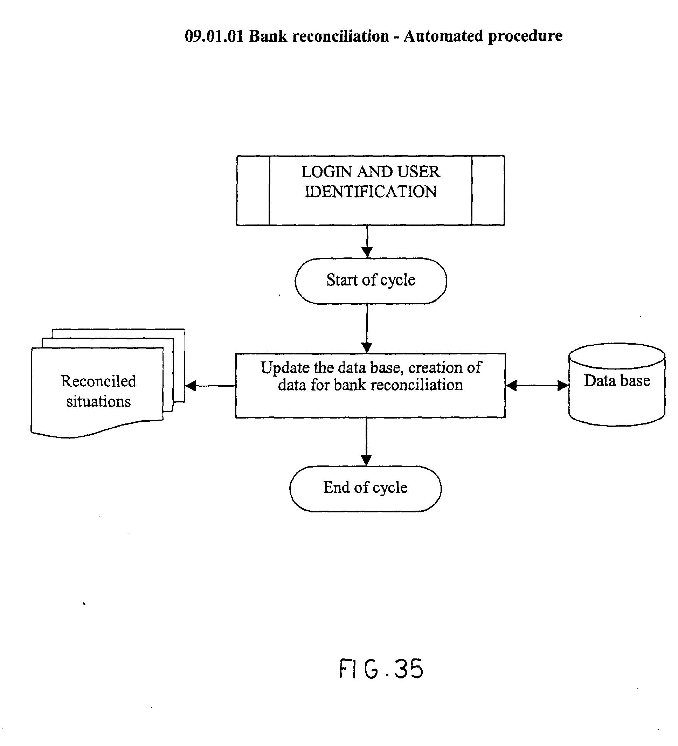

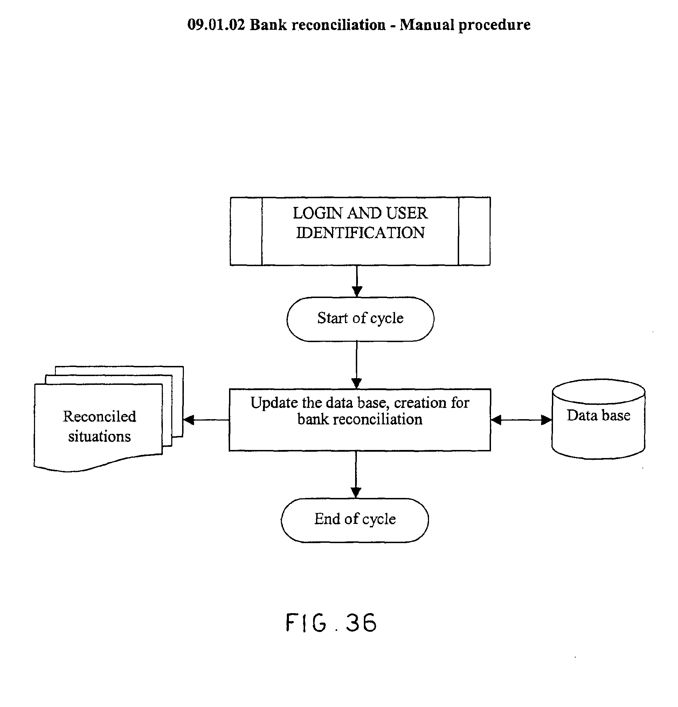

The automated bank reconciliation and manual bank reconciliation sub-processes are described with the aid of Fig. 35 and 36.

### Automated bank reconciliation

| | |
|---|---|
| **Process** | **Bank reconciliation** |
| **Sub-process** | **Automated procedure** |
| **Activity** | **09.01.01 - Reconciliation** |
| Description | Automatic reconciliation of the various operations recorded |
| Input | Accounting data recorded in the reconciliation environment |
| Tasks and checks | Supervised entry of data in the processor according to the path and sequence envisaged by the automated procedure |
| Means | Authorized accounting staff and PC as central data processing media |
| Output | Updating of the accounting data base after creation and recording reconciliations |

### Manual bank reconciliation

| | |
|---|---|
| **Process** | **Bank reconciliation** |
| **Sub-process** | **Manual procedure** |
| **Activity** | **09.02.01 - Reconciliation** |
| Description | Manual reconciliation of the various operations recorded |
| Input | Accounting data recorded in the reconciliation environment |
| Tasks and checks | Visual analysis of operations to be reconciled |
| Means | Authorized accounting staff and PC as central data processing media |
| Output | Updating of the accounting data base after creation and recording reconciliations |

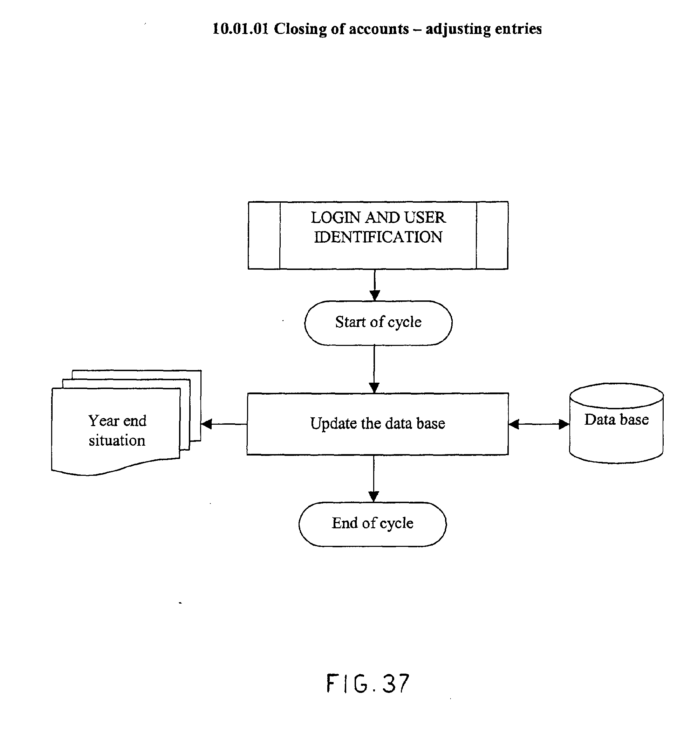

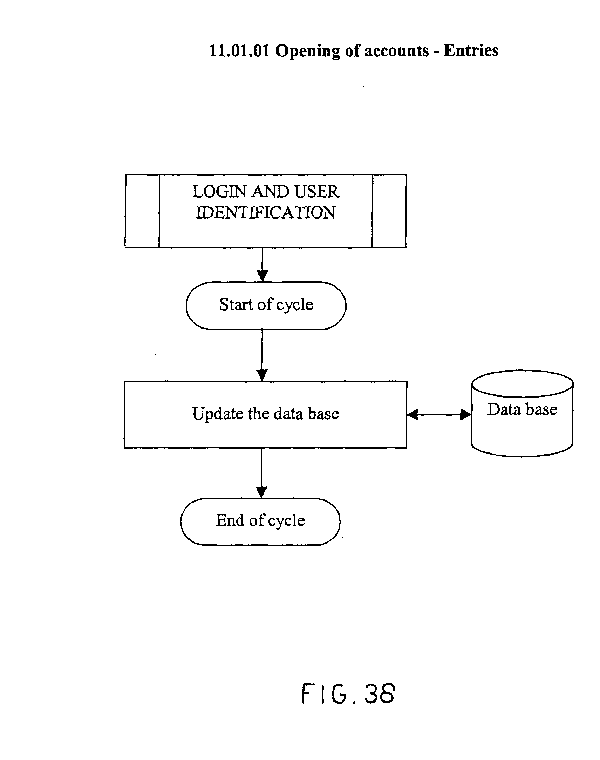

The closing of accounts and opening of accounts processes are described with the aid of Figs. 37 and 38.

### Closing of accounts

| | |
|---|---|
| **Process** | **Closing of accounts** |
| **Sub-process** | **Year end activities** |
| **Activity** | **10.01.01 - Adjusting entries** |
| Description | Entering the adjusting entries |
| Input | Accounting situation at year end before closing |
| Tasks and checks | Entry of data in the processor according to the path and sequence indicated on the screen |
| Means | Authorized accounting staff and PC as data processing media, also remote via the Internet or similar communication systems |
| Output | Updating of the accounting data base |

### Opening of accounts

| | |
|---|---|
| **Process** | **Opening of accounts** |
| **Sub-process** | **Beginning of year activities** |
| **Activity** | **11.01.01 - Entries** |
| Description | Entry or automatic resumption of the accounting situation at the end of the previous year |
| Input | Final accounting situation of the year |
| Tasks and checks | Entry of data in the processor according to the path and sequence indicated on the screen |
| Means | Authorized accounting staff and PC as data processing media, also remote via the Internet or similar communication systems |
| Output | Updating of the accounting data base |

## Claims

1. System for managing accounting data comprising a central system (4) connected to a telecommunication network, said central system comprising a hardware structure and a software component (30), the hardware structure comprising at least a CPU (3) to process software programs and a data base (5) to store data, said data base (5) comprising an accounting data base (5') and a bank reconciliation data base (9), said software component (30) comprising software to manage accounting data, software to manage bank reconciliation data and software to manage the telecommunication network, said central system (4) being accessible to enterprises (1) and banks (8), so that enterprises can record data concerning their accounting operations in said accounting data base (5') and in the bank reconciliation data base (9) and banks (8) can send the banking/financial movements of enterprises (1) to the bank reconciliation data base (9) and check these banking/financial movements in the bank reconciliation data base (9).

2. System as claimed in claim 1, **characterized in that** said central system is accessible to accountants (6), so that said accountants (6) can check and process the accounting operations of enterprises (1) recorded in the accounting data base (5').

3. System as claimed in claim 2, **characterized in that** said enterprises (1), accountants (6) and banks (8) are equipped with passwords to access said central system (4) and the data contained in said data base (5).

4. System as claimed in any of the previous claims, **characterised in that** it comprises an invoicing process for sales composed of the following steps:
- issue by the enterprise (1) of a invoicing document for sale, and
- recording in the data base (5) of the accounting data relevant to the document issued and, if envisaged by the conditions of payment, creation and sending of accounting data and relevant keys of reference for the reconciliation data base (9).

5. System as claimed in claim 4, **characterised in that** said step to record accounting data is performed manually by entering data in conformity with the information in the issued documents.

6. System as claimed in claim 4, **characterised in that** said step to record accounting data is performed automatically by means automatic processing of issued documents.

7. System as claimed in any of the claims from 4 to 6, **characterised in that** said invoicing process for sales comprises the step to print issued documents and check printed issued documents.

8. System as claimed in any of the previous claims, **characterised in that** it comprises a invoicing process for purchases composed of the following steps:
- receipt by the enterprise (1) of an invoicing document for purchases,
- recording in the data base (5) of the accounting data relevant to said document received and, if envisaged by the conditions of payment, creation and sending of accounting data and relevant keys of reference for the reconciliation data base (9).

9. System as claimed in claim 8, **characterised in that** said invoicing process for purchases is also composed of the following steps:
- manual coding of documents received, and
- manual entering of accounting data for entry in the data base, in conformity with the documents received and coded.

10. System as claimed in claim 8, **characterised in that** said invoicing process for purchases comprises an automated procedure for recording in the data base accounting data relevant to the flow of invoices for purchases.

11. System as claimed in any of the previous claims, **characterised in that** it comprises a revenues process without invoice composed of the following steps:
- receipt by the enterprise of documents relevant to revenues without invoice,
- checking the congruity of documents received by comparison with the data base,
- coding of documents received, and
- recording in the data base (5) of the accounting data relevant to documents received and, if envisaged by the conditions of payment, creation and sending of accounting data and relevant keys of reference for the reconciliation data base (9).

12. System as claimed in any of the previous claims, **characterised in that** it comprises a costs process without invoice composed of the following steps:
- receipt by the enterprise of documents relevant to costs without invoice,
- checking the congruity of documents received by comparison with the data base,
- coding of documents received, and
- recording in the data base of the accounting data relevant to documents received and, if envisaged by the conditions of payment, creation and sending of accounting data and relevant keys of reference for the reconciliation data base (9).

13. System as claimed in any of the previous claims, **characterised in that** it comprises a payments process composed of the following steps:
- issue/receipt by the enterprise of documents relevant to payments to be made,
- recording in the data base (5) of the accounting data relevant to payment documents received or issued and sending of accounting data and relevant keys of reference for the reconciliation data base (9).

14. System as claimed in claim 13, **characterised in that** said payments process comprises cash payments by entry in the data base of documents relevant to cash payments at a bank (8).

15. System as claimed in claim 13, **characterised in that** said payments process comprises payments of bills through the following steps:
- updating of the data base (5) in conformity with the bills deposited in a bank (8);
- subsequent updating of the data base (5) in conformity with the communication from the bank (8) which received the bills deposited.

16. System as claimed in claim 13, **characterised in that** said payment process comprises cash order payments composed of the following steps:
- issue of the cash order in electronic or manual format by the firm (1) and updating the data base (5) with the issue of the cash order,
- transmission of the cash order to the bank (8) and relevant updating of the data base, and
- entry of data, relevant to the communication of receipt of the cash order by the bank (8), in the data bank.

17. System as claimed in claim 13, **characterised in that** said payment process comprises payments through offsetting entries, transfers, cheques, credit card and cash card.

18. System as claimed in any of the previous claims, **characterised in that** it comprises a process for sundry accounting entries, such as internal fund financing, outside fund financing, tangible asset investments, intangible asset investments, financial investments, public contributions, memorandum accounts, contingent assets and liabilities, capital gains and losses, said process for sundry accounting entries composed of the following steps:
- receipt by the enterprise of documents relevant to sundry accounting entries;
- checking the congruity of documents received by comparison with the data base,
- coding of the documents received, and
- recording in the data base (5) of the accounting data relevant to documents received and, if envisaged by the conditions of payment, creation and sending of accounting data and relevant keys of reference for the reconciliation data base (9).

19. System as claimed in any of the previous claims, **characterised in that** it comprises a VAT process composed of the following steps:
- periodic settlement of the VAT payable or receivable by an enterprise (1), as shown in the accounting data recorded in the VAT accounts of the data base (5), and consequent updating of the data base.
- VAT payment using the data of the VAT account of the data base (5) and updating of the data base and sending data to the bank reconciliation environment (9).

20. System as claimed in any of the previous claims, **characterised in that** it comprises a social security institutions process composed of the following steps:
- periodic settlement of social security institutions payable or receivable by an enterprise (1), according to the accounting data recorded in the social security institutions accounts of the data base (5), and consequent updating of the data base.
- social security institutions payment using the data of the social security institutions account of the data base (5) and updating of the data base and sending data to the bank reconciliation environment (9).

21. · System as claimed in any of the previous claims, **characterised in that** it comprises a bank reconciliation process in which the various operations recorded in the reconciliation data base (9) are automatically or manually reconciled.

22. System as claimed in any of the previous claims, **characterised in that** it comprises a closing of accounts process in which the data base is updated according to the year end accounting situation and the adjusting entries.

23. System as claimed in any of the previous claims, **characterised in that** it comprises an opening of accounts process in which the data base is updated according to the year end accounting situation.
